(19) **Europäisches Patentamt / European Patent Office / Office européen des brevets**

(11) **EP 2 249 572 A1**

(12) **EUROPEAN PATENT APPLICATION**
published in accordance with Art. 153(4) EPC

(43) Date of publication:
**10.11.2010 Bulletin 2010/45**

(21) Application number: **08873121.1**

(22) Date of filing: **25.12.2008**

(51) Int Cl.:
**H04N 7/32** (2006.01)

(86) International application number:
**PCT/JP2008/073636**

(87) International publication number:
**WO 2009/110160 (11.09.2009 Gazette 2009/37)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.03.2008 JP 2008058375**
**04.07.2008 JP 2008175694**

(71) Applicant: **Kabushiki Kaisha Toshiba**
**Minato-ku**
**Tokyo 105-8001 (JP)**

(72) Inventors:
• **WADA, Naofumi**

  **(JP)**

• **CHUJOH, Takeshi**

  **(JP)**

• **TANIZAWA, Akiyuki**

  **(JP)**

• **YASUDA, Goki**

  **(JP)**

• **WATANABE, Takashi**

  **(JP)**

(74) Representative: **Maury, Richard Philip**
**Marks & Clerk LLP**
**90 Long Acre**
**London**
**WC2E 9RA (GB)**

(54) **DYNAMIC IMAGE ENCODING/DECODING METHOD AND DEVICE**

(57)    A video encoding method wherein an encoded image is used as a reference image for prediction of an image to be encoded next, includes generating a restored image by applying a filter to a local decoded image of an encoded image, setting filter coefficient information of the filter, encoding the filter coefficient information, encoding specific information indicating the local decoded image used as a reference image or the restored image, and storing either the local decoded image or the restored image as the reference image in a memory based on the specific information.

FIG. 3

**Description**

Technical Field

The present invention relates to a video encoding/decoding method and apparatus, in particular, •a video encoding/decoding method and apparatus configured so that an effect of making picture quality improve is obtained, by setting and sending filter coefficient information of a loop filter on an encoding side and using it on a decoding side.

Background Art

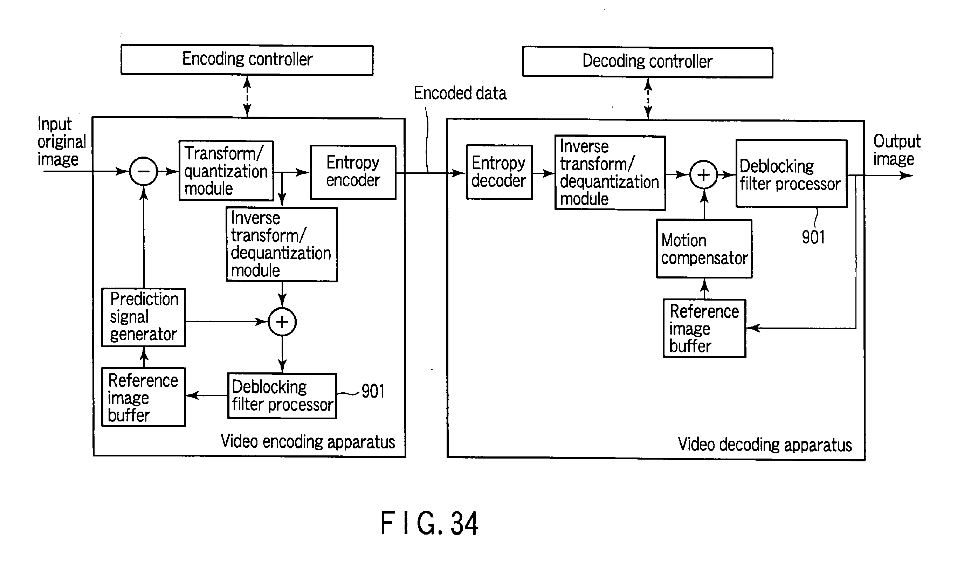

In a video encoding/decoding method for orthogonal-transforming an image in units of a pixel block and quantizing a transform coefficient, picture quality degradation as referred to as block distortion occurs in a decoded image. In contrast, a deblocking filter described in G.Bjontegaard, "Deblocking filter for 4x4 based coding, ITU-T Q.15/SG16 VCEG document,Q15-J-27,May 2000 (Referring to as "Deblocking filter for 4x4 based coding" hereinafter) allows to make the block distortion inconspicuous visually and provide a subjectively good image by applying a lowpass filter to a block boundary. A block diagram of an encoding/decoding apparatus provided with a deblocking filter in "Deblocking filter for 4x4 based coding" is shown in FIG. 34.

The deblocking filter is referred to as a loop filter as it is used in a loop of the encoding and decoding apparatus like a deblocking filter processor 901 of FIG. 34. By using the loop filter, block distortion of a reference image used for prediction can be reduced. Encoding efficiency is improved in the highly compressed bit rate band in which block distortion is easy to occur particularly.

However, the deblocking filter is for processing to reduce degradation occurring due to visual representation by gradating the block border. Error with respect to an input image is not always reduced. Conversely, a small texture may be lost, and picture quality may fall. Further, there is a problem that picture quality degradation occurring due to the filter has an effect to prediction image because a filtered image is used for prediction of an image to be encoded next as a reference image.

On one hand, unlike the loop filter, a filter acting on only an image to be output with a decoder is referred to as a post filter. The post-filter has a feature that since it does not use a filtered image as a reference image, the filter has no affect to prediction image. JP-A 2001 275110 (KOKAI) provides a video decoding method of changing use of a deblocking filter or use of a post filter dynamically. A block diagram of an encoding/decoding apparatus for changing loop filtering and post filtering as described in JP-A 2001-275110 (KOKAI) is shown in FIG. 35.

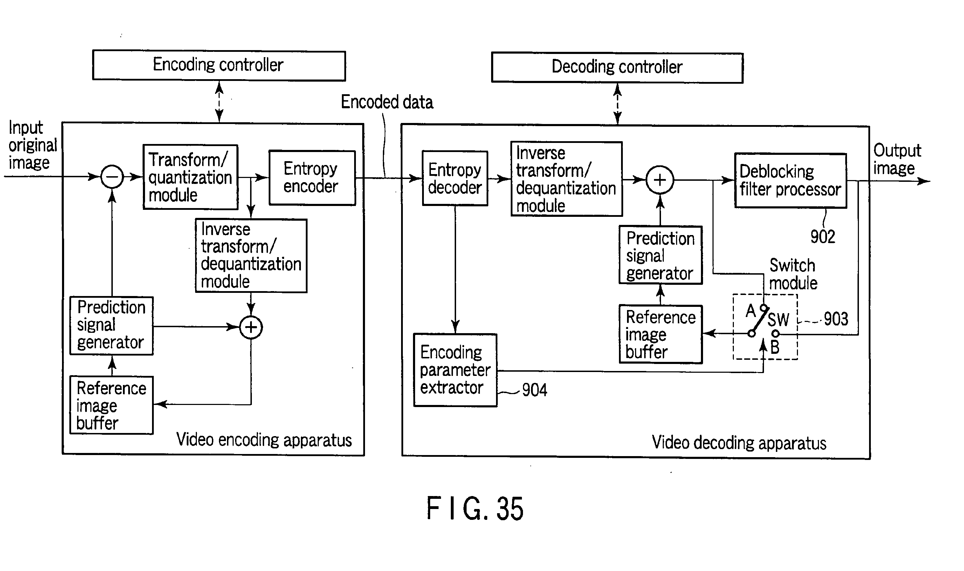

In the video decoding method described in JP-A 2001-275110 (KOKAI), a deblocking filter processor 902 provided in the video decoding apparatus of FIG. 35 generates a decoded image subjected to deblocking filtering and output it as an output image. On one hand, an encoding parameter extractor 904 extracts a quantization parameter from encoded data, and a switch 903 controls whether the filtered image is used as a reference image, based on a value of the quantization parameter. The switch 903 can be controlled in operation so that the deblocking filter is used as a loop filter in the high compression bit rate band in which an effect of the deblocking filtering is high, and the deblocking filter is used as a post filter in the low compression bit rate band. However, in JP-A 2001-275110 (KOKAI), since the similar processing is not carried out on the encoding side, there is a problem that mismatch occurs on the encoding side and the decoding side. Further, because it is not an object for improving picture quality of a reference image on the encoding side, an effect improving an encoding efficiency cannot be obtained.

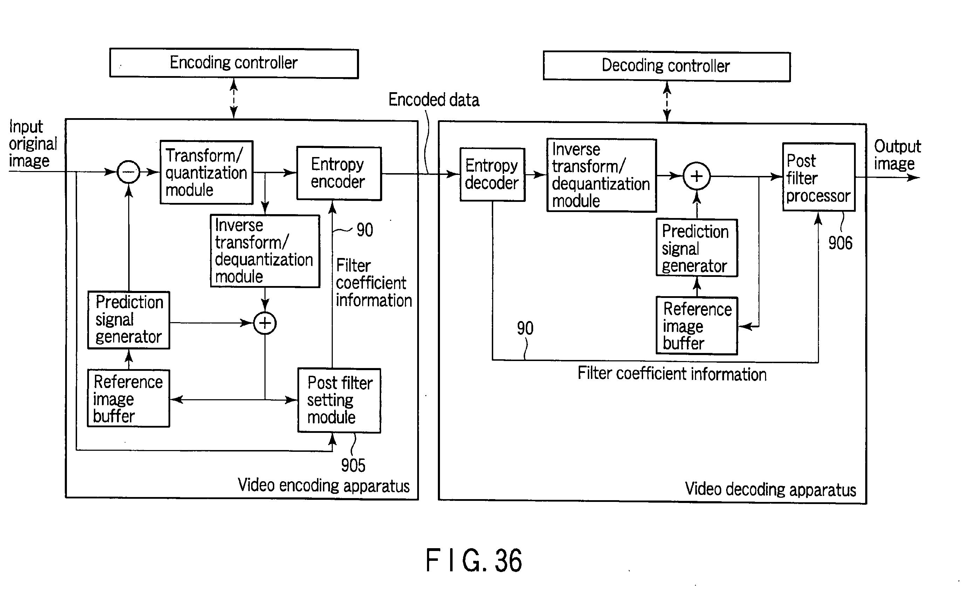

On one hand, S.Wittmann and T.Wdi, "Post-filter SEI message for 4:4:4 coding", JVT of ISO/IEC MPEG & ITU-T VCEG,JVT-S030,April 2006 ("Post-filter SEI message for 4:4:4 coding" is referred to as hereinafter) describes a video encoding/decoding method for setting and encoding filter coefficient information of a post-filter on the encoding side, and performing post filter processing using the filter coefficient information decoded on the decoding side. A block diagram of a video encoding/decoding apparatus in "Post-filter SEI message for 4:4:4 coding" is shown in FIG. 36.

The post-filter setting adjuster 905 provided on the video encoding apparatus of FIG. 36 sets given filter coefficient information and outputs filter coefficient information 90. The filter coefficient information 90 is encoded, decoded on the decoding side, and subjected to post-filtering by using the post filter processor 906 provided on the video decoding apparatus.

The video encoding/decoding manner in "Post-filter SEI message for 4:4:4 coding" makes it possible to improve picture quality of the output image to which the post filter is applied to on the decoding side, by setting filter coefficient information on the encoding side so that an error between the decoded image and the input image reduces. However, the method of "Post-filter SEI message for 4:4:4 coding" is not for using an image improved in picture quality as a reference and cannot provide an effect improving an encoding efficiency on the encoding side.

Disclosure of Invention

As described above, the method disclosed by "Deblocking filter for 4x4 based coding" is not always for improving picture quality and has a problem of propagating picture quality degradation occurring due to the filter to a prediction image.

Further, the method disclosed by JP-A 2001-275110 (KOKAI) is for changing loop filtering and post filtering only on the decoding side and has a problem of causing mismatch between the encoding side and the decoding side.

Further, the method disclosed by "Post-filter SEI message for 4:4:4 coding" is for processing of improving picture quality of an image to output on the decoding side, and cannot provide an effect of improving an encoding efficiency by improving picture quality of a reference image to be used for prediction.

It is an object that the present invention provides a video encoding/decoding method and apparatus for encoding filter coefficient information set on an encoding side and decoding the filter coefficient information on a decoding side, which make it possible to improve an encoding efficiency by changing loop filter processing by similar processing on the encoding side and the decoding side, and by improving picture quality of a reference image to be used for prediction while suppressing the spread of picture quality degradation.

One aspect of the invention provides a video encoding method for using an encoded image as a reference image for prediction of an image to be encoded next, comprising applying a filter to a local decoded image of an encoded image to generate a restored image, setting filter coefficient information of the filter, encoding the filter coefficient information, encoding specific information indicating the local decoded image used as a reference image or the restored image, and storing either the local decoded image or the restored image as a reference image in a memory based on the specific information.

Another aspect of the present invention provides a video decoding method for using a decoded image as a reference image for prediction of an image to be decoded next, comprising applying a filter to the decoded image to generate a restored image, decoding filter coefficient information of the filter, decoding specific information indicating the decoded image used as a reference image or the restored image, and storing the decoded image or the restored image as a reference image in a memory based on the specific information.

Brief Description of Drawings

FIG. 1 is a block diagram of a video encoding apparatus concerning the first embodiment.
FIG. 2 is a block diagram of a loop filter processor in the video encoding apparatus concerning the first embodiment.
FIG. 3 is a block diagram of a switching filter processor in the video encoding apparatus concerning the first embodiment.
FIG. 4 is a flowchart illustrating an operation of the video encoding apparatus concerning the first embodiment.
FIG. 5 is a block diagram of the video decoding apparatus concerning the first embodiment.
FIG. 6 is a block diagram of a first switching filter processor of the video decoding apparatus concerning the first embodiment.
FIG. 7 is a flowchart illustrating an operation of the video decoding apparatus concerning the first embodiment.
FIG. 8 is a block diagram of a second switching filter processor of the video decoding apparatus concerning the first embodiment.
FIG. 9 is a block diagram of a third switching filter processor of the video decoding apparatus concerning the first embodiment.
FIG. 10 is a block diagram of a fourth switching filter processor of the video decoding apparatus concerning the first embodiment.
FIG. 11 is a block diagram of a first video encoding apparatus concerning a second embodiment.
FIG. 12 is a block diagram of a switching information generation predictor of the first video encoding apparatus concerning the second embodiment.
FIG. 13 is a block diagram of a reference switching predictor of the video encoding apparatus concerning the second embodiment.
FIG. 14 is a block diagram of a loop filter processor of the first video encoding apparatus concerning the second embodiment.
FIG. 15 is a flowchart illustrating an operation of the first video encoding apparatus concerning the second embodiment.
FIG. 16 is a block diagram of the first video decoding apparatus concerning the second embodiment.
FIG. 17 is a block diagram of a reference switching predictor of the first video decoding apparatus concerning the second embodiment.
FIG. 18 is a flowchart illustrating an operation of the video decoding apparatus concerning the second embodiment.

FIG. 19 is a block diagram of a second video encoding apparatus concerning the second embodiment.

FIG. 20 is a block diagram of a switching information generation predictor of the second video encoding apparatus concerning the second embodiment.

FIG. 21 is a block diagram of a reference switching predictor of the second video encoding apparatus concerning the second embodiment.

FIG. 22 is a block diagram of a second video decoding apparatus concerning the second embodiment.

FIG. 23 is a block diagram of a reference switching predictor of the second video decoding apparatus concerning the second embodiment.

FIG. 24 is a block diagram of a video encoding apparatus concerning a third embodiment.

FIG. 25 is a block diagram of a loop filter processor of the video encoding apparatus concerning the third embodiment.

FIG. 26 is a block diagram of a switching information generation filter processor of the video encoding apparatus concerning the third embodiment.

FIG. 27 is a flowchart illustrating an operation of the video encoding apparatus concerning the third embodiment.

FIG. 28 is a block diagram of a video decoding apparatus concerning the third embodiment.

FIG. 29 is a block diagram of a switching information generation filter processor of the video decoding apparatus concerning the third embodiment.

FIG. 30 is a flowchart illustrating an operation of the video decoding apparatus concerning the third embodiment.

FIG. 31 is a diagram indicating a syntax structure concerning the first, second and third embodiments.

FIG. 32 is a diagram indicating a loop filter data syntax concerning the first, second and third embodiments.

FIG. 33 is an example of a reference image when a loop filter is switched for every macroblock.

FIG. 34 is a block diagram of an encoding/decoding apparatus in a non-patent document 1.

FIG. 35 is a block diagram of an encoding/decoding apparatus in a patent document 1.

FIG. 36 is a block diagram of an encoding/decoding apparatus in a non-patent document 2.

FIG. 37 is a block diagram of a switching filter processor of a video encoding apparatus concerning a fourth embodiment.

FIG. 38 is a block diagram of a switching filter processor of the video decoding apparatus concerning the fourth embodiment.

FIG. 39 is a diagram illustrating a lookup table for determining a block size and a block partition method concerning the fourth embodiment.

FIG. 40 is a diagram showing an example of a block partition concerning the fourth embodiment.

FIG. 41 is an example of a reference image when the block partition method concerning the fourth embodiment is changed.

FIG. 42 is a diagram illustrating a loop filter data syntax concerning the fourth embodiment.

FIG. 43 is a block diagram of a loop filter processor of a video encoding apparatus concerning a fifth embodiment.

FIG. 44 is a flowchart illustrating an operation of the video encoding apparatus concerning the fifth embodiment.

FIG. 45 is a block diagram of a local decoded image filter processor concerning a sixth embodiment.

FIG. 46 is a block diagram of a video encoding apparatus concerning a seventh embodiment.

FIG. 47 is a block diagram of a video decoding apparatus concerning an eighth embodiment.

FIG. 48 is a block diagram of an example of prediction image generator concerning the seventh embodiment.

FIG. 49 is a block diagram of another example of the prediction image generator concerning the seventh embodiment.

FIG. 50 is a diagram illustrating an example of a layered block partition concerning a ninth embodiment.

FIG. 51 is a diagram illustrating an example of a partition tree and a partitioned block concerning the ninth embodiment.

FIG. 52 is a diagram illustrating an example of a partitioned block concerning the ninth embodiment.

FIG. 53 is a diagram illustrating an example of a block size of each layer concerning the ninth embodiment.

FIG. 54 is a diagram illustrating a syntax including block partition information concerning the ninth embodiment.

FIG. 55 is a diagram illustrating another syntax including block partition information concerning the ninth embodiment.

Best Mode for Carrying Out the Invention

There will now be explained an embodiment of the present invention referring to drawing hereinafter.

(First embodiment)

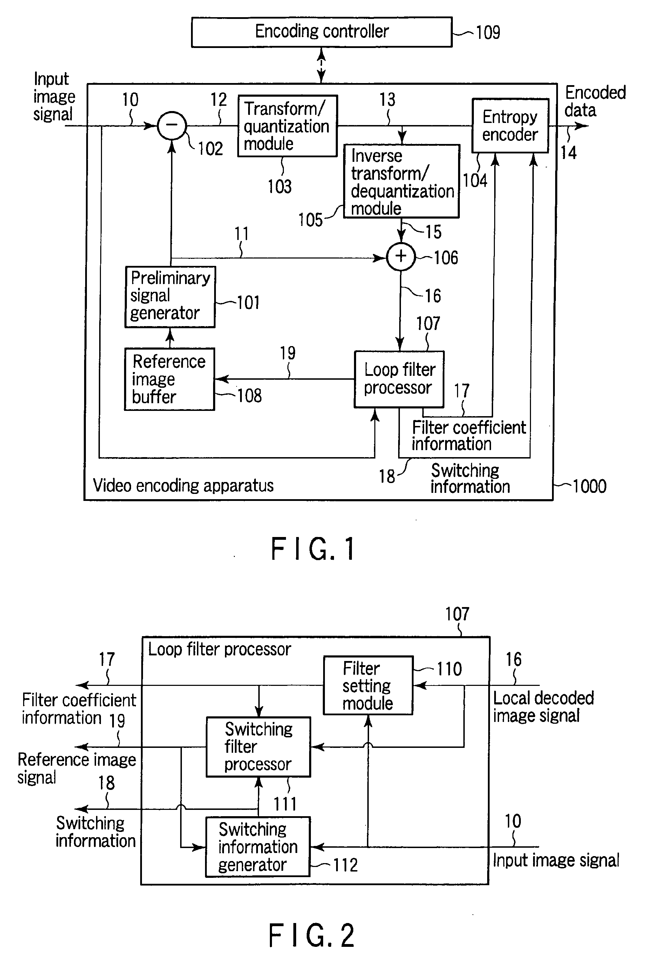

A video encoding apparatus concerning the first embodiment is explained referring to FIG. 1. Components of FIG. 1 are described respectively, hereinafter.

A video encoding apparatus 1000 shown in FIG. 1 comprises a prediction signal generator 101, a subtracter 102, a transform/quantization module 103, an entropy encoder 104, an inverse transform/dequantization module 105, an adder 106, a loop filter processor 107, a reference image buffer 108, and is controlled by an encoding controller 109.

The prediction signal generator 101 receives an encoded reference image signal 19 stored in the buffer 108 and carries out given prediction processing to output a prediction image signal 11. The prediction processing may use, for example, temporal prediction by motion prediction/motion compensation or special prediction from an encoded pixel in a frame.

The subtracter 102 calculates a difference between an acquired input image signal 10 and the prediction image signal 11 to output a prediction error image signal 12. The transform/quantization module 103 acquires at first the prediction error image signal and performs transform processing. The transform/quantization module 103 performs orthogonal transform on the prediction error image signal 12 using, for example, DCT (discrete cosine transform) to generate a transform coefficient. As another embodiment, the transform coefficient may be generated by using techniques such as wavelet transform or independent component analysis. Subsequently, the transform/quantization module 103 performs quantization on the generated transform coefficient based on a quantization parameter set to the encoding controller 109 described below, and outputs a quantized transform coefficient 13. The quantized transform coefficient 13 is input to the inverse transform/dequantization module 105 at the same time as it is input to the entropy encoder 104.

The inverse transform/dequantization module 105 dequantizes the quantized transform coefficient according to a quantization parameter set at the encoding controller 109 and subjects the obtained transform coefficients to inverse transform (for example, inverse discrete cosine transform) and outputs a prediction error image signal 15. The adder 106 adds the prediction error image signal 15 acquired from the inverse transform/dequantization module 105 and the prediction image signal 11 generated with the prediction signal generator 101 and output a local decoded image signal 16.

The loop filter processor 107 acquires a local decoded image signal 16 and an input image signal 10, and outputs a reference image signal 19, filter coefficient information 17, and specific information indicating that a local decoded image or a restored image is used as a reference image, concretely switching information 18 for switching between the local decoded image and the restored image. Detailed description on the loop filter processor 107 will be described below. The reference image buffer 108 temporally stores the reference image signal 19 acquired from the loop filter processor 107. The reference image signal 19 stored in the reference image buffer 108 is referred to in generating the prediction image signal 11 with the prediction signal generator 101.

On one hand, the entropy encoder 104 receives the filter coefficient information 17 and the switching information 18 as well as quantized transform coefficient 13, and further other encoding parameters such as prediction mode information, block size switching information, a motion vector, and a quantization parameter, and subjects them to entropy coding (for example, Huffman encoding or arithmetic coding) to output encoded data 14. The encoding controller 109 performs a feedback control of the number of encoded bits, a quantization control, and a mode control, in other words, controls the whole of encoding.

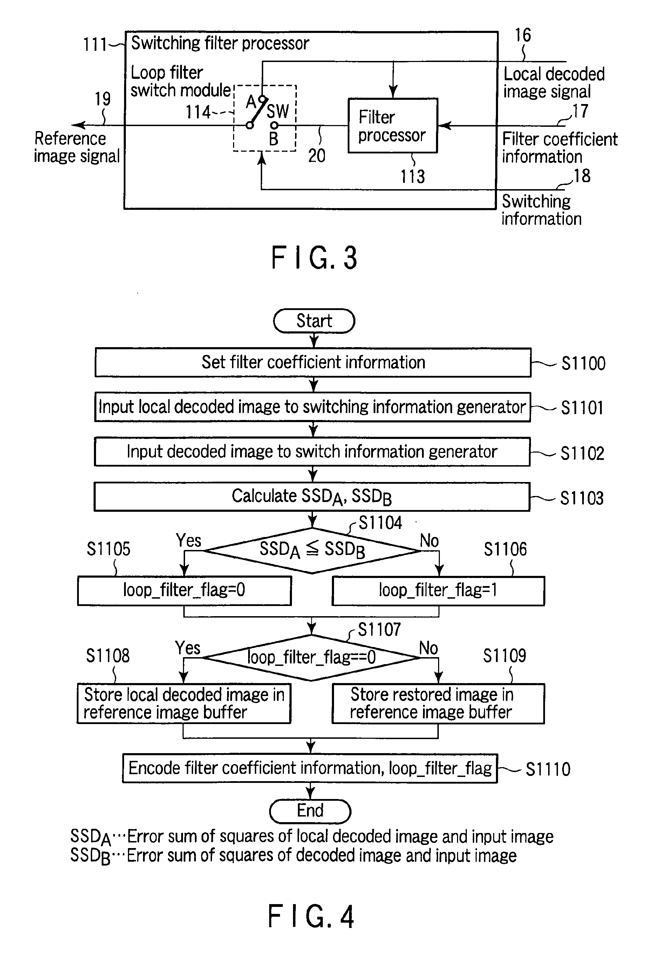

Subsequently, the loop filter processor 107 of the video encoding apparatus concerning the first embodiment will be described in detail in conjunction with FIGS. 2 and 3. Components of FIGS. 2 and 3 are described hereinafter.

The loop filter processor 107 shown in FIG. 2 comprises a filter setting adjuster 110, a switching filter processor 111, and a switching information generator 112. Further, the switching filter processor 111 comprises a filter processor 113 and a loop filter switch module 114 as shown in FIG. 3. The switch SW of FIG. 3 switches between a terminal A and a terminal B. The filter setting module 110 receives the local decoded image signal 16 and the input image signal 10, and sets given filter coefficient information 17. A method for setting the filter coefficient information 17 will be described hereinafter. The filter coefficient information 17 set is input to the switching filter processor 111 described below and the entropy encoder 104.

The switching filter processor 111 comprises a filter processor 113 and a loop filter switch module 114 inside it. It receives the local decoded image 16, the filter coefficient information 17 and the switching information 18 and outputs the reference image signal 19. The switching information generator 112 receives the input image signal 10 and the reference image signal 19 from the switching filter processor 111, and generates the switching information 18 according to a given switching determination method. The generated switching information 18 is input to the switching filter processor 111 and the entropy encoder 104. The switching determination method will be described hereinafter.

The filter processor 113 receives the local decoded image signal 16 and the filter coefficient information 17, and performs filter processing on the local decoded image signal 16 according to the filter coefficient information 17 to generate a restored image signal 20. The generated restored image signal 20 is input to the loop filter switch module 114 described below. The loop filter switch module 114 receives the switching information 18, and switches between the terminal A and the terminal B with the inner switch SW according to the switching information 18 to output the local decoded image signal 16 or the restored image signal 20 as the reference image signal 19.

The above is configuration of the video encoding apparatus concerning the first embodiment.

There will be described in detail an operation of the loop filter of the video encoding apparatus concerning the first embodiment in conjunction with FIGS. 1, 2, 3 and 4. FIG. 4 is a flowchart illustrating an operation of the loop filter of the video encoding apparatus 1000 concerning the first embodiment.

At first, when the input image signal 10 is input to the video encoding apparatus 1000 of FIG. 1, the subtracter 102 subtracts the prediction image signal 11 generated with the prediction signal generator 101 from the input image signal 10 and generates a prediction error image signal 12. The generated prediction error image signal 12 is transformed and quantized with the transform/quantization module 103, output as a quantized transform coefficient 13, and encoded with the entropy encoder 104. On one hand, the quantized transform coefficient 13 is inverse-transformed and dequantized with the inverse transform/dequantization module 105 inside the video encoding apparatus 1000 and output as prediction error image signal 15. The prediction error image signal 15 is added to the prediction image signal 11 output from the prediction signal generator 101 with the adder 106, whereby a local decoded image signal 16 is generated.

The above serial processing is conventional encoding processing in the video encoding as referred to as so-called hybrid coding performing prediction processing and transform processing.

There will now be described in detail an operation of a loop filter which is characteristic processing in the video encoding apparatus 1000 concerning the first embodiment.

At first, the filter setting module 110 inside the loop filter processor 107 of FIG. 2 receives the local decoded image signal 16 and the input image signal 10, and sets the filter coefficient information 17 (step S1100). The filter setting module 110 uses a two-dimensional Wienerfilter used for image restoration conventionally, designs a filter coefficient so that a mean square error of an image obtained by filtering the local decoded image signal 16 and the input image signal 10 becomes minimum, and sets a value indicating the designed filter coefficient and a filter size as the filter coefficient information 17. The filter setting module 110 outputs the set filter coefficient information 17 to the filter processor 113 of FIG. 3 and the entropy encoder 104.

Next, the switching filter processor 111 of FIG. 2 receives the local decoded image signal 16, the filter coefficient information 17 and the switching information 18, and outputs the local decoded image signal 16 or the restored image signal 20 generated with the filter processor 113 as the reference image signal 19 based on the switching information 18 (steps S1101 to S1109).

At first, about a case that the local decoded image signal 16 is used as the reference image signal 19 and a case that the restored image signal 20 is used as the reference image signal 19, the switching information generator 112 performs switching determination processing and outputs the switching information 18 for determining which of the local decoded image signal 16 or the restored image signal 20 is used as the reference image signal 19. The inner switch SW of the loop filter switch module 114 is switched based on the generated switching information 18 to output the reference image signal 19. Detailed description of operations from the step S1101 to the step S1109 in the loop filter processor 107 is described hereinafter.

At first, the switch SW of the loop filter switch module 114 of FIG. 3 is connected to the terminal A to input the local decoded image signal 16 to the switching information generator 112 as the reference image signal 19 (step S1101). Next, the switch SW is connected to the terminal B to input the restored image signal 20 to the switching information generator 112 as the reference image signal 19 (step S1102). When the switch SW is connected to the terminal B, the filter processor 113 performs filter processing on the local decoded image signal 16 based on the filter coefficient information 17 to produce a restored image signal 20. As an example, assuming that a pixel at a position (x, y) on the local decoded image is assumed to be F (x, y), a width of 2-dimensional filter is W, a filter coefficient is h(i,j)(-w≤i≤w,-h≤j≤h, w=W/2,h=H/2), the restored image G (x, y) is expressed by the following equation.

[Equation 1]

$$G(x,y) = \sum_{i=-w}^{w} \sum_{j=-h}^{h} h(i,j) \cdot F(x+i, y+j)$$

Next, the switching information generator 112 of FIG. 2 calculates a residual square-sum $SSD_A$ of the local decoded image signal 16 and the input image signal 10 and a residual square-sum $SSD_B$ of the restored image signal 20 and the input image signal 10 (step S1103). The switching determination processing is done for each local region of the image. Assuming that the pixel position in the local region is i, the number of all pixels is N, the local decoded image signal 16 is Fi, the restored image signal 20 is Gi, the input signal is Ii, $SSD_A$ and $SSD_B$ are expressed by the following equation.

[Equation 2]

$$SSD_A = \sum_{i=1}^{N} (F_i - I_i)^2$$

$$SSD_B = \sum_{i=1}^{N} (G_i - I_i)^2$$

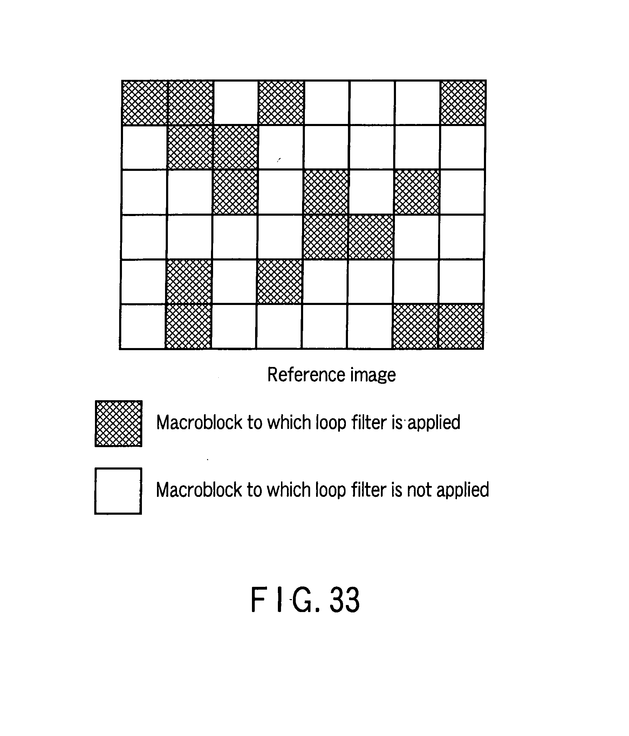

Next, the following switching determination processing is done based on $SSD_A$ and $SSD_B$ (step S1104). If $SSD_A$ is not more than $SSD_B$, 0 is set to loop_filter_flag which is the switching information 18 (step S1105). Conversely if $SSD_A$ is more than $SSD_B$, 1 is set to loop_filter_flag (step S1106). An example of the reference image when the switching determination processing is done in units of a macroblock obtained by partitioning the image in units of 16x16 pixels is shown in FIG. 33. If the local region is assumed to be a macroblock, N of [equation 2] is 256, and the switching information 18 are output in units of a macroblock. As another embodiment, the switching determination processing may determine the image signal in units of a frame, a slice or a block having a size different from the macroblock. In that case, the switching information 18 is output in a unit corresponding to a determination result.

Next, the loop filter switch module 114 of FIG. 3 receives loop_filter_flag which is the generated switching information 18 and switches the inner switch SW based on the value of loop_filter_flag (step S1107). When loop_filter_ flag is 0, the loop filter switch module 114 connects the switch SW to the terminal A, whereby the local decoded image signal 16 is temporally stored in the reference image buffer 108 as the reference image signal 19 (step S1108). On one hand, when loop_filter_flag is 1, the loop filter switch module 114 connects the switch SW to the terminal B, whereby the restored image signal 20 is temporally stored in the reference image buffer 108 as the reference image signal 19 (step S1109).

The above is operations from step S1101 to step S1109 in the loop filter processor 107.

At last, the filter coefficient information 17 generated with the filter setting module 110 and the switching information 18 generated with the switching information generator 112 are encoded with the entropy encoder 104, and multiplexed to a bit stream along with quantized transform coefficient 13, prediction mode information, block size switching information, a motion vector, quantization parameter, etc., and then transmitted to a video decoding apparatus to be described below (step S1110).

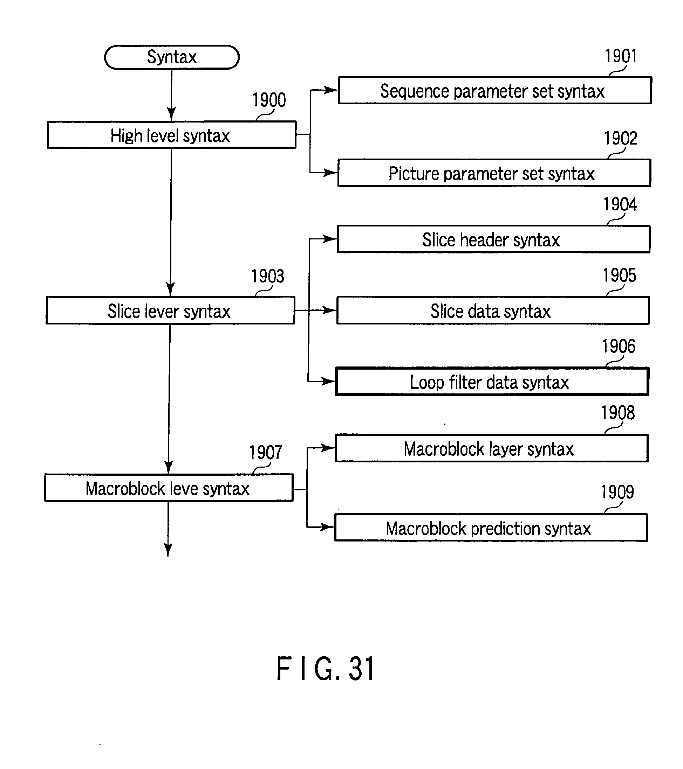

There will now be described in detail an overview of a syntax structure used in the present embodiment about the encoding method of the filter coefficient information 17 and the switching information 18 referring to FIG. 31. In the following example, it is assumed that the filter coefficient information 17 is set in units of a slice, and the switching information 18 is set in units of a macroblock.

A syntax is formed mainly from three parts, and the high level syntax (1900) contains syntax information of a higher layer higher than a slice. A slice level syntax (1903) recites information which is necessary for every slice and a macroblock level syntax (1907) recites transform coefficient data, prediction mode information and a motion vector which are needed for every macroblock. Each syntax comprises further detailed syntaxes. A high level syntax (1900) is configured with a sequence level syntax and a picture level syntax such as a sequence parameter set syntax (1901) and a picture parameter set syntax (1902), etc. The slice level syntax (1903) comprises a slice header syntax (1904), a slice data syntax (1905), a loop filter data syntax (1906), etc. Further, a macroblock level syntax (1907) comprises a macroblock layer syntax (1908), a macroblock prediction syntax (1909), etc.

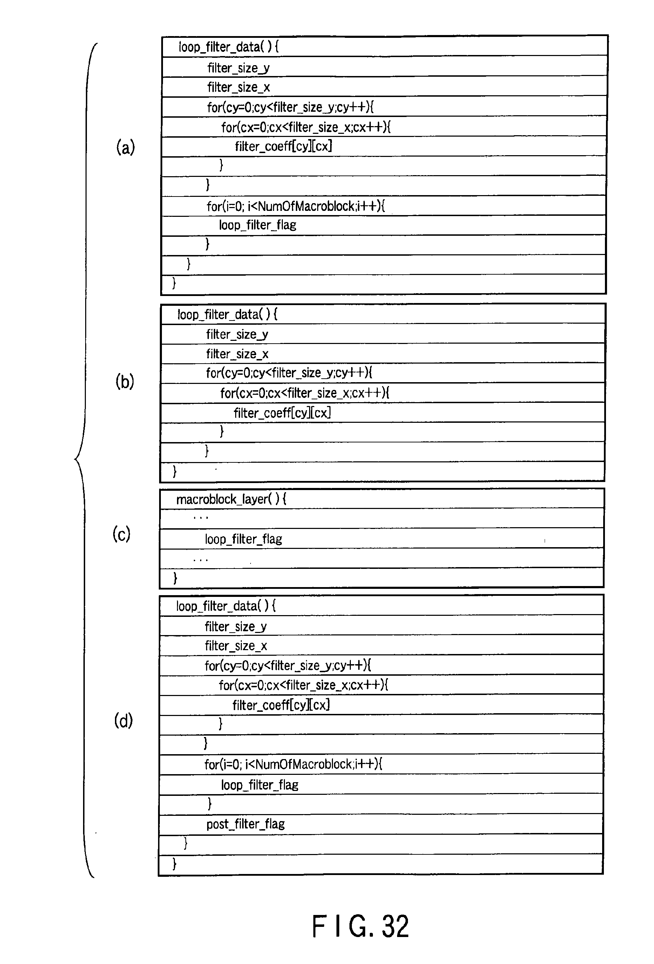

The loop filter data syntax (1906) recites filter coefficient information 17 which is a parameter on the loop filter of the present embodiment and the switching information 18 as shown in FIG. 32(a). The filter_coeff [cy] [cx] filter of FIG. 32(a) that is the filter coefficient information 17 is a coefficient of a two-dimensional filter, and filter_size_y and filter_size_x are values for determining the filter size. The value indicating the filter size is recited in the syntax, but a predetermined fixed value may be used without reciting it in the syntax as another embodiment. However, when the filter size is set to a fixed value, it should be noted that the video encoding apparatus 1000 and a video decoding apparatus 2000 to be described below must use the same value. Further, loop_filter_flag of FIG. 32(a) is the switching information 18, and loop_filter_flag of the number of macroblocks (NumOfMacroblock) which is a total of macroblocks in a slice are transferred.

The above is explanation on an operation concerning the loop filter of the video encoding apparatus 1000.

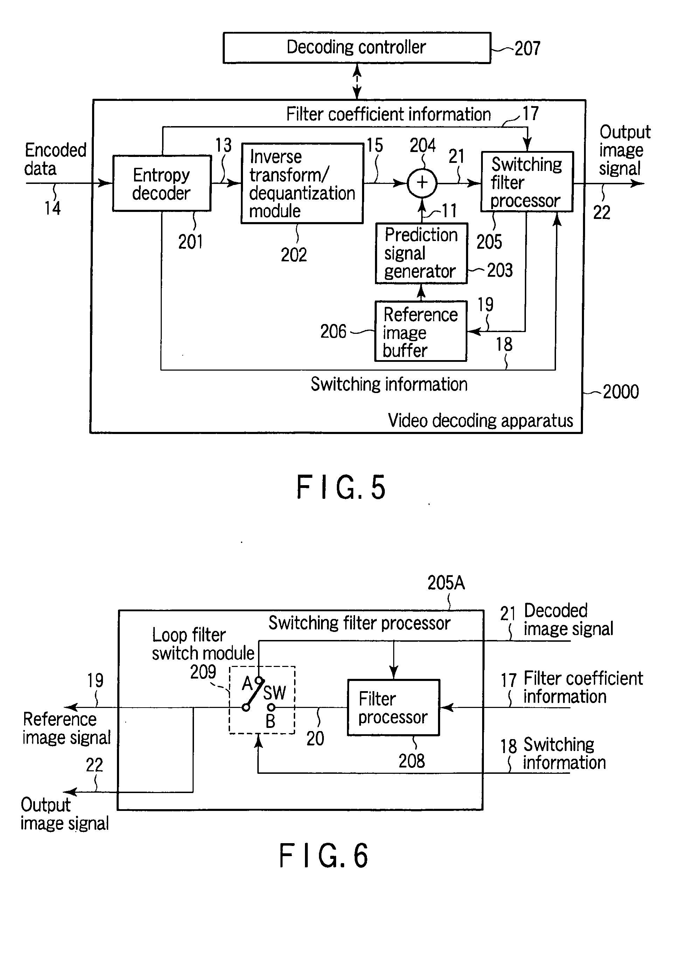

Next, a video decoding apparatus corresponding to the video encoding apparatus 1000 is explained. The video decoding apparatus concerning the first embodiment is explained referring to FIG. 5. Components of FIG. 5 are described respectively hereinafter.

A video decoding apparatus 2000 shown in FIG. 5 comprises an entropy decoder 201, an inverse transform/ dequantization module 202, a prediction signal generator 203, an adder 204, a switching filter processor 205, a reference image buffer 206, and is controlled with a decoding controller 207.

The entropy decoder 201 decodes a code string of each syntax of encoded data 14 with respect to each of the high level syntax, slice level syntax and macroblock level syntax according to the syntax structure shown in FIG. 31, and reconstructs the quantized transform coefficient 13, filter coefficient information 17 and switching information 18.

The inverse transform/dequantization module 202 receives the quantized transform coefficient 13, and subjects it to dequantization and inverse orthogonal transform (for example, inverse discrete cosine transform) to output prediction error image signal 15. The inverse orthogonal transform is explained here. However, when wavelet transform is done in the video encoding apparatus 1000, the inverse transform/dequantization module 202 executes corresponding inverse quantization and inverse wavelet transform.

The prediction signal generator 203 acquires a decoded reference image signal 19 stored in the reference image buffer 206, and carries out given prediction processing to output a prediction image signal 11. The prediction processing may use, for example, temporal prediction by motion compensation or special prediction from the decoded pixel in a frame. However, it should be noted that prediction processing similar to the video encoding apparatus 1000 is executed.

The adder 204 adds the acquired prediction error image signal 15 and the prediction image signal 11 to produce a decoded image signal 21.

The switching filter processor 205 receives the decoded image signal 21, filter coefficient information 17 and switching information 18, and outputs a reference image signal 19. The switching filter processor 205 is described in detail below.

The reference image buffer 206 temporally stores the reference image signal 19 acquired from the switching filter processor 205. The reference image signal 19 stored in the reference image buffer 206 is referred to when the prediction image signal 11 is generated with the prediction signal generator 203.

The decoding controller 207 performs control of decoding timing and controls the whole decoding.

Next, the switching filter processor 205 of the video decoding apparatus concerning the first embodiment is described in detail referring to FIG. 6. Components of FIG. 6 are described respectively hereinafter.

The switching filter processor 205A shown in FIG. 6 has a filter processor 208 and a loop filter switch module 209. The switch SW switches between the terminal A and the terminal B.

The filter processor 208 receives a decoded image signal 21 and filter coefficient information 17 reconstructed with the entropy decoder 201, and filters the decoded image signal 21 according to the filter coefficient information 17 to generate a restored image signal 20. The generated restored image 20 is input to a loop filter switch module 209 described below, and output as an output image signal 22 at the timing that the decoding controller 207 manages.

The loop filter switch module 209 receives switching information 18 reconstructed with the entropy decoder 201 and switches between the terminal A and the terminal B by the inner switch SW according to the switching information 18 to output the decoded image signal 21 or the restored image signal 20 as the reference image signal 19.

The above is configuration of the video decoding apparatus concerning the first embodiment.

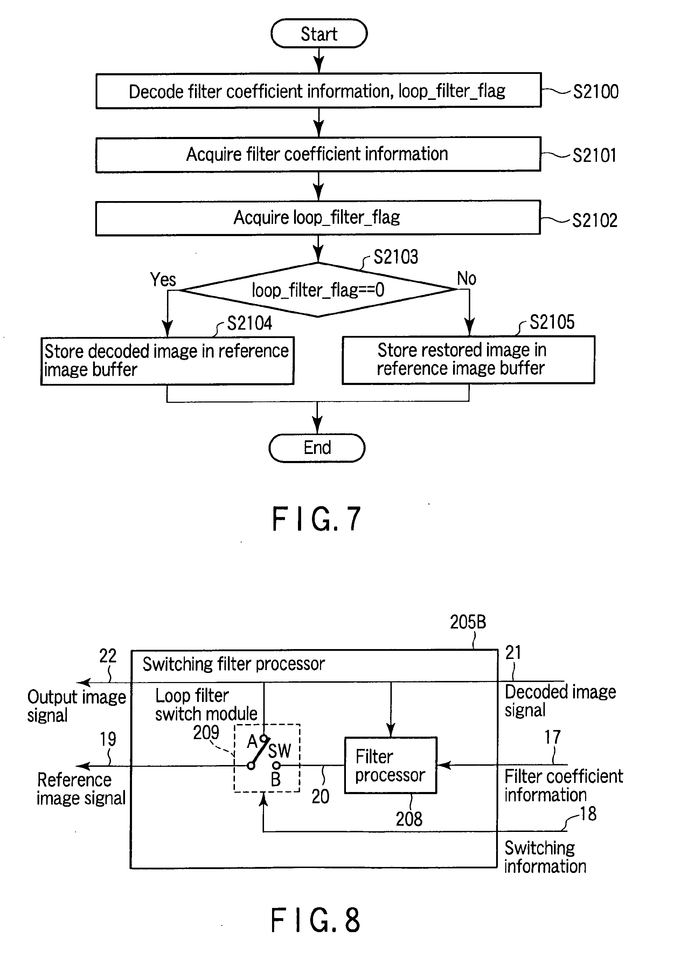

Next, there will be described in detail an operation of the loop filter of the video decoding apparatus concerning the first embodiment referring to FIGS. 5, 6 and 7. In addition, FIG. 7 is a flowchart illustrating an operation of the loop filter of the video decoding apparatus 2000 concerning the first embodiment.

At first, when encoded data 14 is input to the video decoding apparatus 2000 of FIG. 5, the entropy decoder 201 decodes prediction mode information, block size switching information, a motion vector, quantization parameter, etc. as well as the transform coefficient 13, filter coefficient information 17 and switching information 18 according to the syntax structure of FIG. 31. Next, the transform coefficient 13 decoded with the entropy decoder 201 is input to the inverse transform/dequantization module 202, and is dequantized according to the quantization parameter set with the decoding controller 207. The dequantized transform coefficient is subjected to inverse orthogonal transform (for example, discrete cosine transform), whereby a prediction error image signal 15 is reconstructed. The prediction error image signal 15 is added to the prediction image signal 11 output from the prediction signal generator 203 with the adder 204, whereby the decoded image signal 21 is generated.

A series of processing described above is conventional decoding processing of the video encoding as referred to as so-called hybrid encoding which performs prediction processing and transform processing.

There will now be described in detail an operation concerning the loop filter which is characteristic processing of the video decoding apparatus 2000 concerning the first embodiment referring to FIGS. 6 and 7.

At first, the entropy decoder 201 performs entropy-decoding on the filter coefficient information 17 and the switching information 18 according to the syntax structure of FIG. 31 (step S2100). The loop filter data syntax (1906) belonging to the slice level syntax (1903) of the syntax structure of FIG. 31 recites the filter coefficient information 17 which is a parameter related to the loop filter of the present embodiment and the switching information 18, as shown in FIG. 32(a). The filter_coeff[cy][cx] of FIG. 32(a) which is the filter coefficient information 17 is a coefficient of a two-dimensional filter, and filter_size_y and filter_size_x are values that decide a filter size. The value indicating the filter size is described in syntax herein, but as another embodiment, a predetermined fixed value may be used as the filter size without describing the syntax. However, it should be noted that when the filter size is set to a fixed value, the same value must be used in the previously described video encoding apparatus 1000 and the video decoding apparatus 2000. Further, loop_filter_flag of FIG. 32(a) is the switching information 18, and loop_filter_flag of the number of macroblocks (NumOfMacroblock) which is a total of macroblocks in a slice is decoded.

Next, the filter processor 208 of FIG. 6 receives the decoded filter coefficient information 17 (step S2101). When the loop filter switch module 209 receives loop_filter_flag which is the decoded switching information 18 (step S2102), it switches the inner switch SW based on value of this loop_filter_flag (step S2103). When loop_filter_flag is 0, the loop filter switch module 209 connects the switch SW to the terminal A to store temporally the decoded image signal 21 in the reference image buffer 206 as the reference image signal 19 (step S2104). On one hand, when loop_filter_ flag is 1, the loop filter switch module 209 connects the switch SW to the terminal B to store temporally the restored image signal 20 in the reference image buffer 206 as the reference image signal 19 (step S2105). When the switch SW is connected to the terminal B, the filter processor 113 filters the decoded image signal 21 based on the filter coefficient information 17 to produce a restored image signal 20. As an example, assuming that the pixel at a position $(x, y)$ on the decoded image is $F(x, y)$, the width of the two-dimensional filter is W, height thereof is H, the filter coefficient is $h(i,j)(-w \leq i \leq w, -h \leq j \leq h, w=W/2, h=H/2)$, the restored image $G(x, y)$ is expressed by [equation 1].

The loop filter switch module 209 receives the switching information 18 in units of a macroblock according to the syntax of FIG. 32(a), and switches the switch SW. As another embodiment, the video encoding apparatus 1000 encodes the switching information 18 in units of a frame or a slice or in units of a block of the size different from the macroblock, the video decoding apparatus 2000 executes decoding of the switching information 18 and switching of the switch SW of the switching module 209 in similar units.

The above is explanation on an operation concerning the loop filter of the video decoding apparatus 2000.

In this way, according to the video encoding apparatus related to the first embodiment, picture quality of the restored image can be improved by setting the filter coefficient information of the loop filter so that an error between the input image and the prediction signal is minimum. Further, since the loop filter switch module 114 switches which of the local decoded image signal 16 or the restored image signal 20 is used as a reference image for every local region, propagation of picture quality degradation is prevented without using the restored image signal 20 as a reference image with respect to the regions degraded in picture quality due to filtering, and prediction precision can be improved by using the restored image signal 20 as a reference image with respect to the regions improving in picture quality.

Further, according to the video decoding apparatus 2000 related to the first embodiment, since the filter processing and switching processing are performed by using the filter coefficient information and switching information similar to the video encoding apparatus 1000, it can be guaranteed that the reference image of the video decoding apparatus 2000 is synchronized with the reference image of the video encoding apparatus 1000.

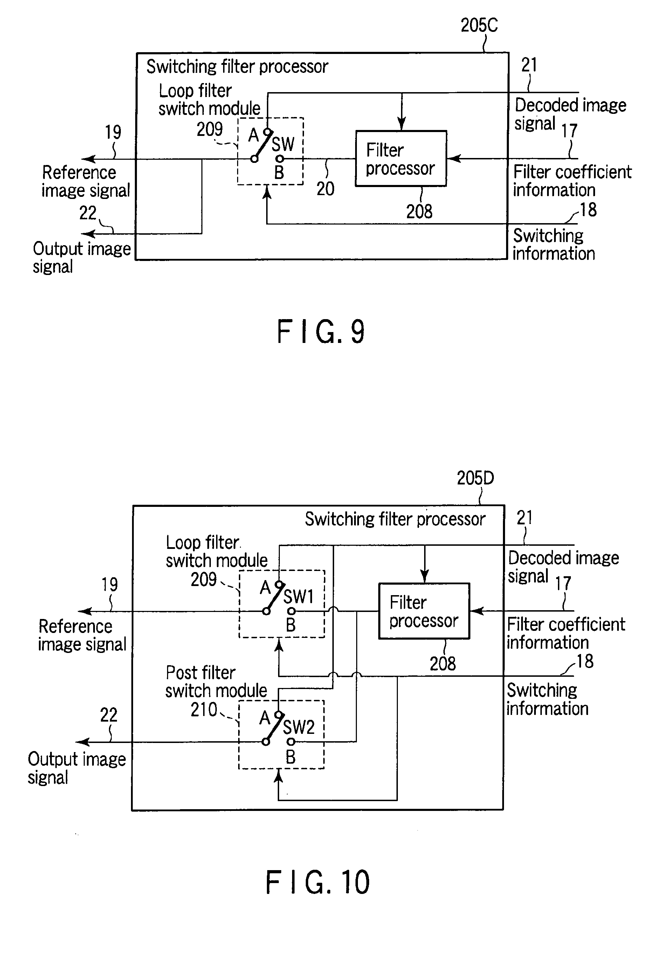

In addition, the switching filter processor 205A of the video decoding apparatus 2000 concerning the first embodiment outputs the reference image signal 19 as the image signal 22, but the decoded image signal 21 may be output as the output image signal 22 like the switching filter processor 205B of FIG. 8, and the restored image signal 20 may be output as the output image signal 22 like the switching filter processor 205C of FIG. 9. In this case, the switching information indicating that the decoded image or the restored image is used as an output image is generated.

Further, a post filter switching module 210 may be provided newly like the switching filter processor 205D of FIG. 10 to change the output image signal 22 by switching the switch SW2 by the switching information 18. In this case, post_filter_flag is recited in the syntax in units of a slice as the switching information 18 for switching the output image signal 22 as shown in, for example, FIG. 32(d), and the switch W2 is switched by it. The post_filter_flag may be described in units of a frame or a macroblock or in units of a block of the size different from the macroblock similarly to the loop_filter_flag.

In addition, the video encoding apparatus 1000 and video decoding apparatus 2000 concerning the first embodiment perform filter processing on the local decoded image signal 16, but they may use the local decoded image signal 16 which has been subjected to conventional deblocking filter processing.

In addition, this video encoding apparatus 1000 and video decoding apparatus 2000 can be realized by using general-purpose computer equipment as basic hardware. In other words, the prediction signal generator 101, subtracter 102, transform/quantization module 103, entropy encoder 104, inverse transform/dequantization module 105, adder 106, loop filter processor 107, reference image buffer 108, encoding controller 109, filter setting module 110, switching filter processor 111, switching information generator 112, filter processor 113, loop filter switch module 114, entropy decoder 201, inverse transform/dequantization module 202, prediction signal generator 203, adder 204, loop filter processor 205, reference image buffer 206, decoding controller 207, filter processor 208, loop filter switch module 209, and realizing post filter switching module 210 can be realized by making a processor mounted on the computer equipment execute a program. At this time, the video encoding apparatus 1000 and video decoding apparatus 2000 may be realized by installing the program in the computer equipment beforehand or by distributing the program by storing in a storing medium such as CD-ROM or running through a network and installing this program in the computer equipment appropriately. Further, the reference image buffer 108 and the reference image buffer 206 can be realized by utilizing appropriately a memory built-in or externally mounted on the computer equipment, a hard disk, or a storing medium such as CD-R, CD-RW, DVD-RAM, DVD-R.

(Second embodiment)

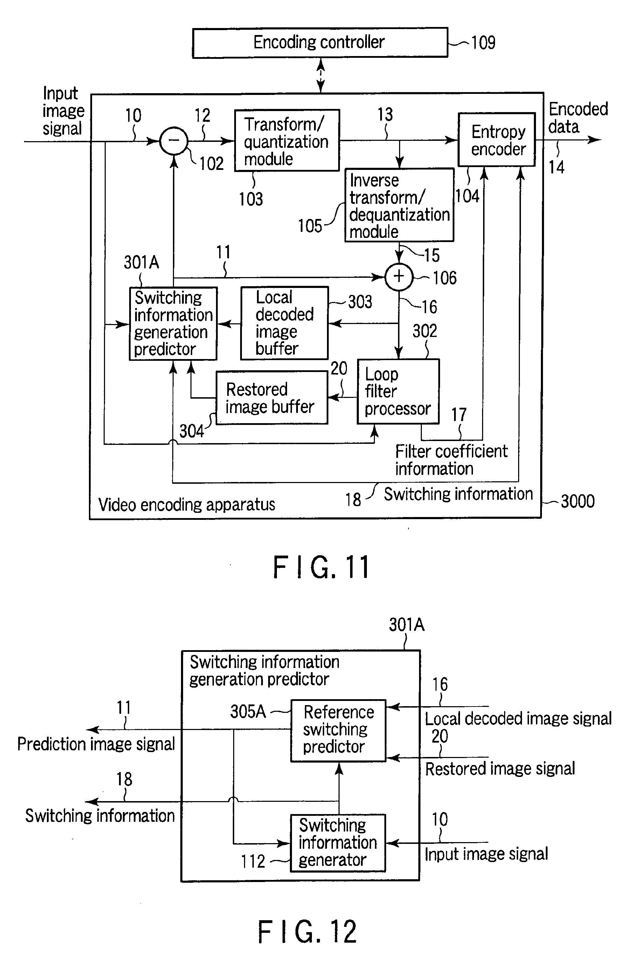

A video encoding apparatus concerning the second embodiment is explained referring to FIG. 11.

Components of FIG. 11 are described respectively hereinafter.

A video encoding apparatus 3000 shown in FIG. 11 comprises a switching information generation predictor 301A, a loop filter processor 302, a local decoded image buffer 303, a restored image buffer 304, a subtracter 102, a transform/quantization module 103, an entropy encoder 104, an inverse transform/dequantization module 105, and an adder 106, and is controlled with an encoding controller 109.

Since the subtracter 102, transform/quantization module 103, entropy encoder 104, inverse transform/dequantization module 105, adder 106 and encoding controller 109 operate similarly to components of the same reference numbers as those of the video encoding apparatus 1000 of FIG. 1, and thus further explanation is omitted here.

The switching information generation predictor 301A comprises a reference switching predictor 305A and a switching information generator 112 inside it as shown in FIG. 12. The switching information generator 112 operates similarly to components of the same reference numbers as those of the video encoding apparatus concerning the first embodiment, and thus further explanation is omitted here. The switching information generation predictor 301A receives a local decoded image signal 16, a restored image signal 20 and an input image signal 10, and outputs a prediction image signal 11 and switching information 18.

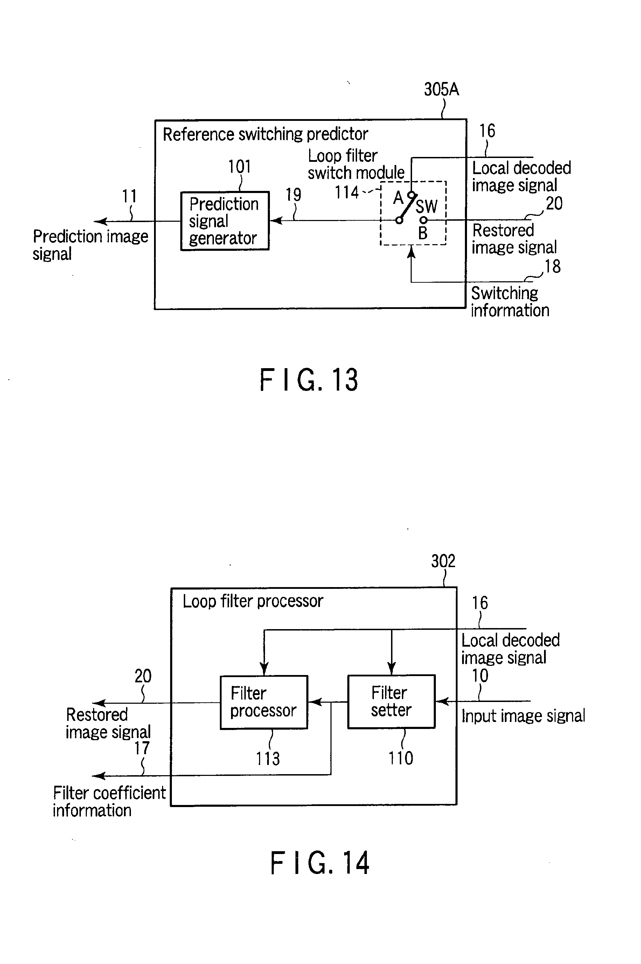

The loop filter processor 302 comprises a filter setting module 110 and a filter processor 113 as shown in FIG. 14. The filter setting module 110 and filter processor 113 operates similarly to components of the same reference numbers as those of the video encoding apparatus concerning the first embodiment, and thus further explanation is omitted here.

The loop filter processor 302 receives the local decoded image signal 16 and the input image signal 10, and outputs a restored image signal 20 and filter coefficient information 17. The local decoded image buffer 303 receives the local decoded image signal 16 generated with the adder 106, and temporally stores it.

The local decoded image signal 16 stored in the local decoded image buffer 303 is input to the switching information generation predictor 301A. The restored image buffer 304 receives the restored image signal 20 generated with the loop filter processor 302, and temporally stores it. The restored image signal 20 stored in the restored image buffer 304 is input to the switching information generation predictor 301A.

The reference switching predictor 305A comprises a prediction signal generator 101 and a loop filter switch module 114 as shown in FIG. 13. The prediction signal generator 101 and the loop filter switch module 114 each operate similarly to components of the same reference numbers as those of the video encoding apparatus 1000 concerning the first embodiment, and thus further explanation is omitted here. The reference switching predictor 305A receives the local decoded image signal 16, restored image signal 20 and switching information 18, and performs given prediction processing using either the local decoded image signal 16 or the restored image signal 20 as a reference image, based on the received switching information 18 to output a prediction image signal 11. The prediction processing may use, for example, temporal prediction by motion prediction/motion compensation or spatial prediction from the encoded pixel in a frame.

The above is configuration of the video encoding apparatus concerning the second embodiment.

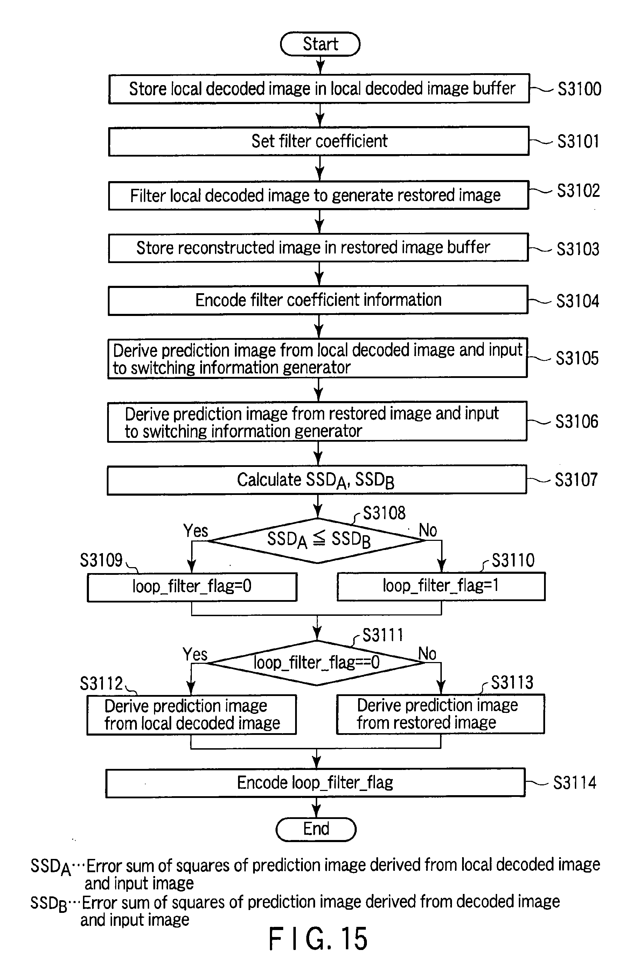

There will be described in detail an operation of the video encoding apparatus concerning the second embodiment referring to FIGS. 11, 12, 13, 14 and 15, hereinafter. In addition, FIG. 15 is a flowchart illustrating an operation of the loop filter of the video encoding apparatus 3000 concerning the second embodiment.

At first, prediction, transform, quantization, entropy encoding are done similarly to conventional hybrid encoding and the video encoding apparatus 1000 concerning the first embodiment, and local decoding is performed in the encoding apparatus to produce a local decoded image signal 16. Next, the generated local decoded image signal 16 is temporally stored in the local decoded image buffer 303 (step S3100). The filter setting module 110 in a loop filter processor 302 receives the local decoded image signal 16 and an input image signal 10 and sets filter coefficient information 17 (step S3101). A two-dimensional Wiener filter used for image restoration conventionally is used here, a filter coefficient is designed so that a mean square error between the image obtained by subjecting the local decoded image signal 16 to filter processing and the input image signal 10 is minimum, and a value indicating the designed filter coefficient and a filter size are set as the filter coefficient information 17. The set filter coefficient information 17 is output to the filter processor 113 of the loop filter processor 302 similarly, and output to the entropy encoder 104.

The filter processor 113 of the loop filter processor 302 filters the local decoded image signal 16 using the filter coefficient information 17 acquired from the filter setting module 110 to produce a restored image signal 20 (step S3102). The generated restored image signal 20 is temporally stored in the restored image buffer 304 (step S3103).

The filter coefficient information 17 generated with the filter setting module 110 is encoded with the entropy encoder 104, multiplexed to a bit stream along with the quantized transform coefficient 13, prediction mode information, block size switching information, a motion vector, quantization parameter, etc., and transmitted to the video decoding apparatus 4000 described below (step S3104). In this time, the filter coefficient information 17 is recited, as shown in FIG. 32(b), in the loop filter data syntax (1906) belonging to the slice level syntax (1903) in the syntax structure of FIG. 31. The filter_coeff [cy] [cx] of FIG. 32(b) which is the filter coefficient information 17 is a coefficient of a two-dimensional filter, and filter_size_y and filter_size_x are values for determining a filter size. The value indicating the filter size is described in the syntax here, but, as another embodiment, a predetermined fixed value may be used as a filter size without describing it in the syntax. However, when the filter size is set to the fixed value, it should be noted that the similar value must be used in the video encoding apparatus 3000 and a video decoding apparatus 4000 described below.

Next, the switching information generation predictor 301A performs given prediction processing using the local decoded image signal 16 or the restored image signal 20 as a reference image, and outputs a prediction image signal 11 (steps S3105 to 3113). At first, the reference switching predictor 305A acquires a prediction image when the local decoded image is used as a reference image and a prediction image when the restored image is used as a reference image respectively, and the switching information generator 112 performs switching determination processing based on them and produces switching information 18 for determining which of the local decoded image or the restored image is used as a reference image. The reference switching predictor 305A switches the inner switch SW of the loop filter switch module 114 of FIG. 13 based on the generated switching information 18, and produces a prediction image signal 11. Detailed description of operations from step 3105 to step 3113 is described hereinafter.

At first, the reference switching predictor 305A connects the switch SW of the loop filter switch module 114 of FIG. 13 to the terminal A. The prediction image signal 11 is acquired using the local decoded image signal 16 as a reference image in the prediction signal generator 101 and input to the switching information generator 112 of FIG. 12 (step S3105). Next, the reference switching predictor 305A connects the switch SW to the terminal B. The prediction image signal 11 is acquired using the restored image signal 20 as a reference image in the prediction signal generator 101 and input to the switching information generator 112 of FIG. 12 (step S3106).

The switching information generator 112 calculates a residual square-sum $SSD_A$ of the prediction image derived from the local decoded image signal 16 and the input image signal 10, and a residual square-sum $SSD_B$ of the prediction image derived from the restored image signal 20 and the input image signal 10 (step S3107). Assuming the prediction image derived from the local decoded image signal 16 is Fi, and the prediction image derived from the restored image signal 20 is Gi, the $SSD_A$ and the $SSD_B$ are expressed by an equation similar to [equation 2].

The switching information generator 112 performs the following switching determination processing based on the $SSD_A$ and $SSD_B$ (step S3108). If $SSD_A$ is not more than $SSD_B$, 0 is set to loop_filter_flag which is the switching information 18 (step S3109). In contrast, if $SSD_A$ is a higher value than $SSD_B$, 1 is set to loop_filter_flag (step S3110). Here, the switching determination processing is done for every macroblock, and the switching information 18 is output in units of a macroblock. As another embodiment, the switching determination processing may be determined in units of a frame or a slice or in units of a block of the size different from the macroblock. In this case, the switching information 18 also is output in a unit corresponding to a determination result.

Further, when prediction processing in the prediction signal generator 101 is motion prediction, the switching determination processing may use a conventional method as the motion prediction processing. For example, a cost J expressed by the following equation, in which the number of encoded bits R of parameter information such as switching information, a reference image index, a motion vector is added to a residual square-sum D, is calculated with respect to each of the local decoded image and the restored image, and the determination may be performed using the cost J.

[Equation 3]

$$J = D + \lambda \times R$$

$\lambda$ of [equation 3] is given by a constant and determined based on a quantization width and a value of a quantization parameter. The switching information, reference image index and motion vector by which the cost J calculated in this way has the minimum value are encoded. Further, in the present embodiment, the residual square-sum is used, but as another embodiment, a residual absolute value sum may be used, or these may be subjected to Hadamard transform, and an approximate value may be used. Further, the cost may be obtained using activity of the input image, and a cost function may be obtained using a quantization width, a quantization parameter. Further, the prediction processing is limited to motion prediction. If the prediction processing is a prediction necessary for some parameters, the cost J may be calculated by the equation by defining the number of encoded bits of the parameter as R.

Next, the loop filter switch module 114 of FIG. 13 receives loop_filter_flag which is the generated switching information 18, and switches the inner switch SW based on the value of loop_filter_flag (step S3111). When loop_filter_flag is 0, the loop filter switch module 114 connects the switch SW to the terminal A, and outputs the local decoded image signal 16 as the reference image signal 19, and the prediction image signal 11 is generated with the prediction signal generator 101 (step S3112). On one hand, when loop_filter_flag is 1, the loop filter switch module 114 connects the switch SW to the terminal B, and outputs the restored image signal 20 as the reference image signal 19, and the prediction image signal 11 is generated with the prediction signal generator 101 (step S3113).

The above is the operation from step 3105 to step 3113 in the switching information generation predictor 301A.

At last, the entropy encoder 104 encodes the switching information 18, and multiplexes it to a bit stream along with the quantized transform coefficient 13, prediction mode information, block size switching information, a motion vector, a quantization parameter, and transmits it to the video decoding apparatus 4000 described below (step S3114). In this time, loop_filter_flag which is the switching information 18 is recited in the macroblock layer syntax (1908) belonging to the macroblock level syntax (1907) in the syntax structure of FIG. 31 as shown FIG. 32(c).

The above is explanation on an operation concerning the loop filter of the video encoding apparatus 3000.

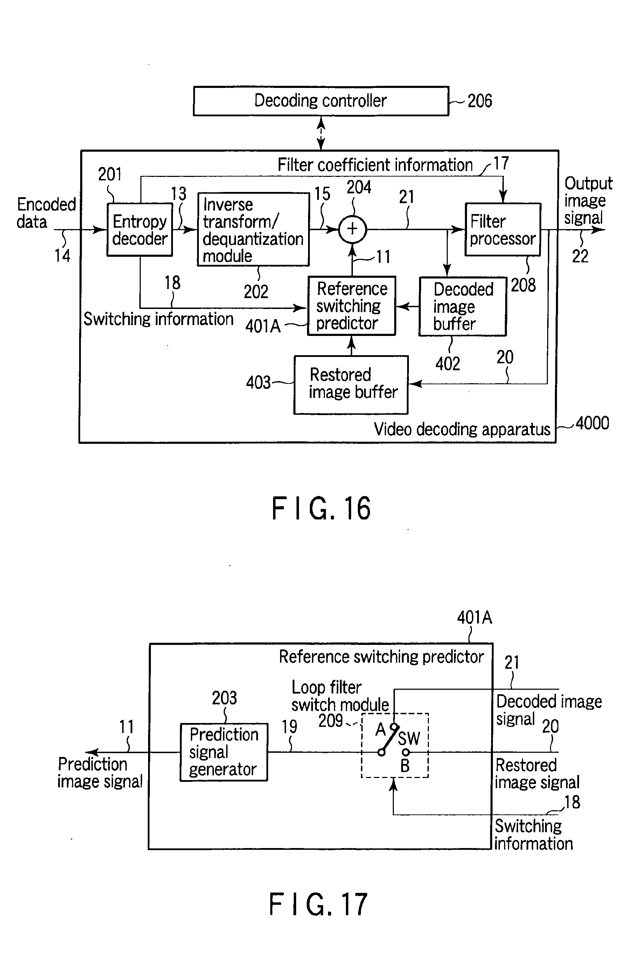

Next, a video decoding apparatus corresponding to the video encoding apparatus 3000 is explained. The video decoding apparatus concerning the second embodiment is explained referring to FIG. 16. Components of FIG. 16 are described respectively hereinafter.

The video decoding apparatus 4000 shown in FIG. 16 comprises a reference switching predictor 401A, a decoded image buffer 402, a restored image buffer 403, an entropy decoder 201, an inverse transform/dequantization module 202, an adder 204, and a filter processor 208, and is controlled with a decoding controller 206.

The entropy decoder 201, inverse transform/dequantization module 202, adder 204, filter processor 208 and decoding controller 206 operate similarly to components of the same reference numbers as those of the video decoding apparatus 2000 concerning the first embodiment, and thus further explanation is omitted here.

The reference switching predictor 401A comprises a prediction signal generator 203 and a loop filter switch module 209 as shown in FIG. 17. The prediction signal generator 203 and the loop filter switch module 209 each operate similarly to components of the same reference numbers as those of the video decoding apparatus 2000 concerning the first embodiment, and thus further explanation is omitted here. The reference switching predictor 401A receives the decoded image signal 21, the restored image signal 20, and the switching information 18 decoded with the entropy decoder 201, and performs given prediction processing by using either the decoded image signal 21 or the restored image signal 20 as a reference image to output a prediction signal. The prediction processing may use, for example, temporal prediction by motion compensation or spacial prediction from the decoded pixel in a frame. However, it should be noted that prediction processing similar to the video encoding apparatus 3000 is executed.

The decoded image buffer 402 acquires the decoded image signal 21 generated with the adder 204, and temporally stores it. The decoded image signal 21 stored in the decoded image buffer 402 is input to the reference switching predictor 401A. The restored image buffer 403 acquires the restored image signal 20 generated with the filter processor 208, and temporally stores it. The restored image signal 20 stored in the restored image buffer 403 is input to the reference switching predictor 401A.

The above is a configuration of the video decoding apparatus concerning the second embodiment.

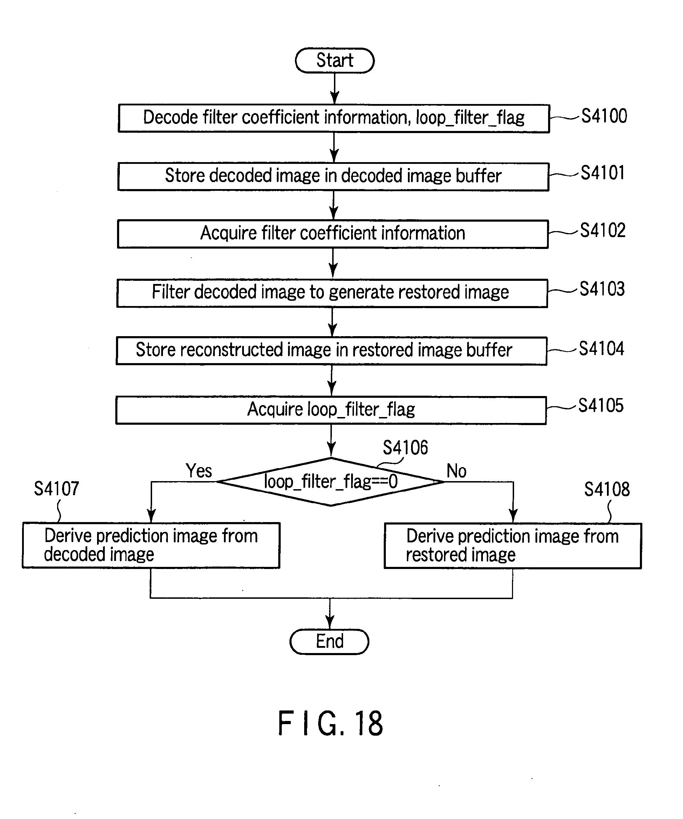

Next, there will be described in detail an operation of the video decoding apparatus concerning the second embodiment referring to FIGS. 16, 17 and 18. In addition, FIG. 18 is a flowchart illustrating an operation of the loop filter of the video decoding apparatus 4000 concerning the second embodiment.

At first, when the encoded data 14 is input to the video decoding apparatus 4000, the entropy decoder 201 decodes the transform coefficient 13, prediction mode information, block size switching information, a motion vector, a quantization parameter, etc., as well as filter coefficient information 17, switching information 18 according to the syntax structure of FIG. 31 (step S4100).

The loop filter data syntax (1906) belonging to the slice level syntax (1903) in the syntax structure of FIG. 31 recites the filter coefficient information 17 as shown in FIG. 32(b). Here, filter_coeff [cy][cx] of FIG. 32(b) which is the filter coefficient information 17 is a two-dimensional filter coefficient, and filter_size_y and filter_size_x decide values for determining a filter size. The value indicating a filter size is recited in the syntax here, but as another embodiment, a predetermined fixed value may be used as a filter size without reciting it in the syntax. However, when the filter size is set to a fixed value, it should be noted that the similar value must be used in the video encoding apparatus 3000 and video decoding apparatus 4000.

Further, the macroblock layer syntax (1908) belonging to the macroblock level syntax (1907) in the syntax structure of FIG. 31 recites loop_filter_flag as the switching information 18 as shown in FIG. 32(c).

The transform coefficient 13 decoded with the entropy decoder 201 is subjected to entropy decoding, inverse quantization, and inverse transform similarly to conventional hybrid encoding or the video decoding apparatus 2000 concerning the first embodiment, and is added to the prediction image signal 11 output from the reference switching predictor 401A, whereby the decoded image signal 21 is output. The decoded image signal 21 is output to the filter processor 208, and temporally stored in the decoded image buffer 402 (step S4101).

The filter processor 208 acquires the filter coefficient information 17 reconstructed with the entropy decoder 201 (step S4102). Further, the filter processor 208 receives the decoded image signal 21, and filters the decoded image using the filter coefficient information 17 to produce the restored image signal 20 (step S4103). The filter processor 208 outputs the generated restored image signal 20 as an output image signal 22, and temporally stores it in the restored image buffer 403 (step S4104).

Next, the reference switching predictor 401A generates the prediction image signal 11 using the decoded image signal 21 or the restored image signal 20 as a reference image (step 4105-4108). There will be explained an operation from step 4105 to step 4108, hereinafter.

At first, the reference switching predictor 401A of FIG. 17 acquires loop_filter_flag which is the decoded switching information 18 (step S4105). Next, the loop filter switch module 209 inside the reference switching predictor 401A switches the switch SW based on the acquired loop_filter_flag (step S4106). When loop_filter_flag is 0, the loop filter switch module 209 connects the switch SW to the terminal A, acquires the decoded image signal 21 as the reference image signal 19, and sends it to the prediction signal generator 203. The prediction signal generator 203 generates the prediction image signal 11 based on the reference image signal 19 corresponding to the decoded image signal 21 (step S4107). On one hand, when loop_filter_flag is 1, the loop filter switch module 209 connects the switch SW to the terminal B, acquires the restored image signal 20 as the reference image signal 19, and sends it to the prediction signal generator 203. The prediction signal generator 203 generates the prediction image signal 11 based on the reference image signal 19 corresponding to the restored image signal 21 (step S4108).

The above is an operation from step S4105 to step S4108 in the reference switching predictor 401A.

The reference switching predictor 401A acquires the switching information 18 in units of a macroblock according to the syntax of FIG. 32(c), and switches the switch SW, here. As another embodiment, when the video encoding apparatus 3000 encodes the switching information 18 in units of a frame or a slice or in units of a block of the size different from the macroblock, the video decoding apparatus 4000 executes decoding of the switching information 18 and switching of the switch SW in the loop filter switch module 209 in the similar unit.

The above is explanation on an operation concerning the loop filter of the video decoding apparatus 4000.

In this way, according to the video encoding apparatus related to the second embodiment, the picture quality of the reference image can be improved by doing the filter processing by setting filter coefficient information of the loop filter so that an error between the input image and the prediction signal is minimum. Further, by switching either the local decoded image signal 16 or the restored image signal 20 as a reference image for the prediction processing with the loop filter switch module 114 provided inside the switching information generation predictor 301A, propagation of picture quality degradation is prevented without using the restored image signal 20 as a reference image with respect to the regions degraded in picture quality due to filtering, and prediction precision can be improved by using the restored image signal 20 as a reference image with respect to the regions improving in picture quality.

Further, according to the video decoding apparatus 4000 related to the second embodiment, by performing the filter processing and switching of the reference image using the filter coefficient information and the switching information similarly to the video encoding apparatus 3000, it can be guaranteed that the reference image in the video decoding apparatus 4000 synchronizes with the reference image in the video encoding apparatus 3000.

In addition, the video decoding apparatus 4000 concerning the second embodiment outputs the restored image 20 generated with the filter processor 208 as the output image signal 22, but, as other embodiments, may output the decoded image signal 21 as the output image signal 22. Further, the video encoding apparatus 3000 and video decoding apparatus 4000 concerning the second embodiment performs filter processing on the local decoded image signal 16, but they may use the local decoded image signal 16 subjected to conventional deblocking filter processing.

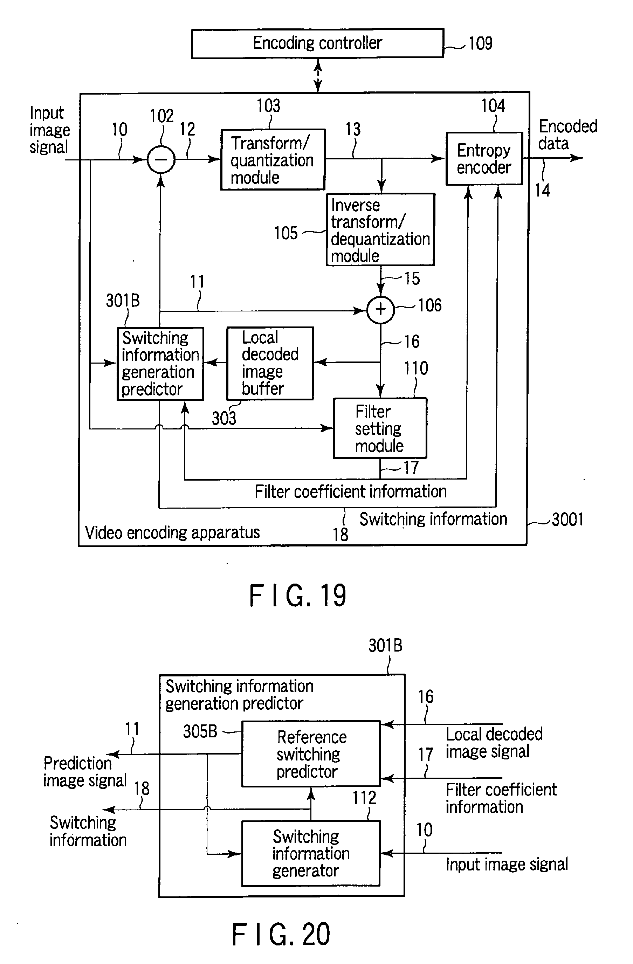

Further, in the video encoding/decoding apparatus concerning the second embodiment, the restored image signal 20 temporally stored in the restored image buffer is acquired with the reference switching predictor 401A in the above embodiment and used, but the restored image may be generated in the reference image switching predictor by providing the filter processor inside the reference switching predictor without using the restored image buffer as another embodiment. Diagrams of a video encoding apparatus and a video decoding apparatus in such an embodiment are shown in FIGS. 19 to 23.

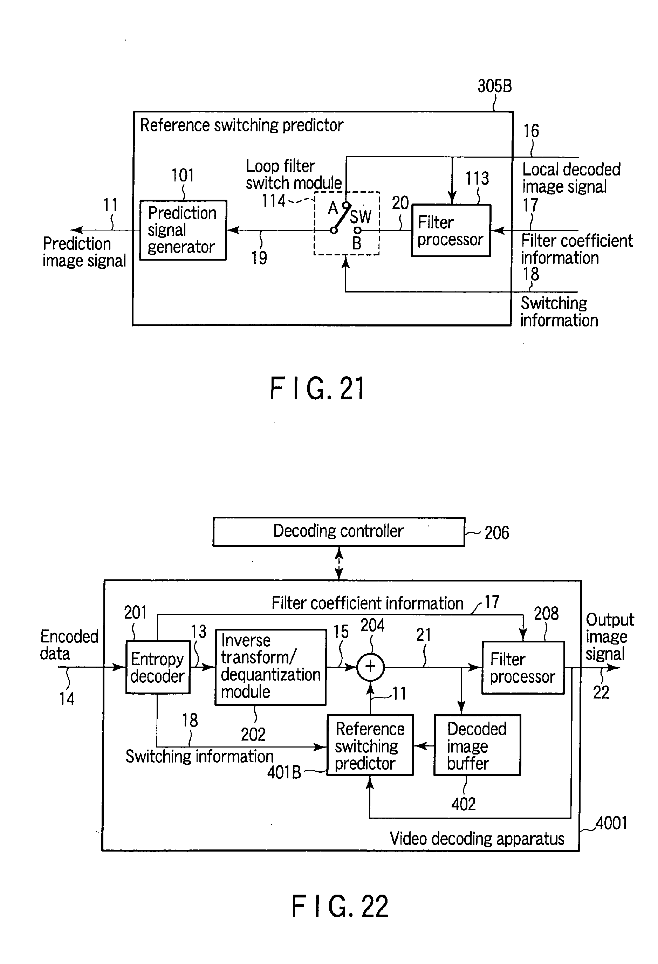

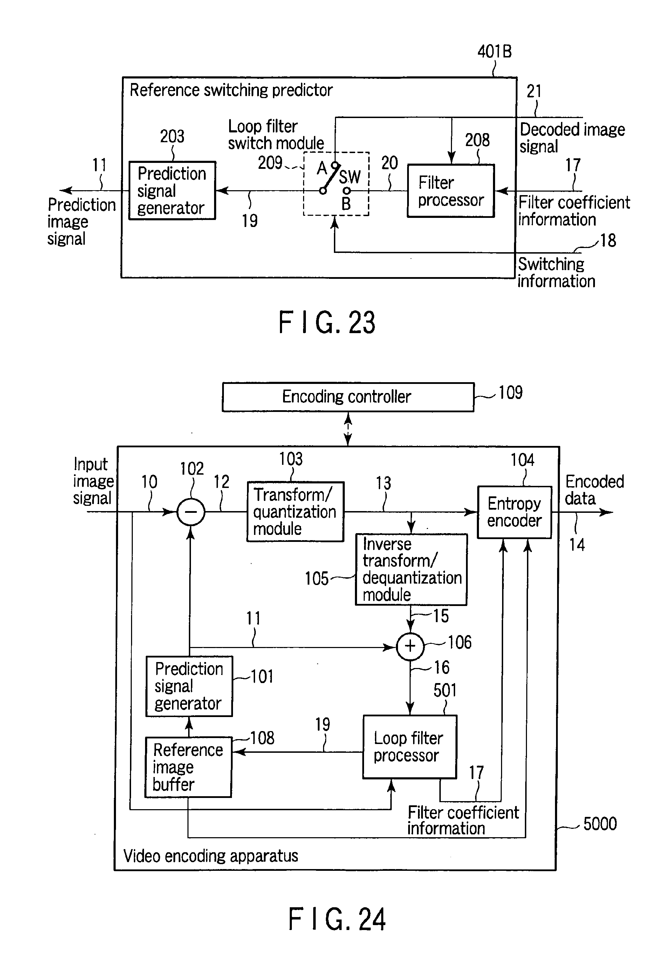

The video encoding apparatus 3001 of FIG. 19 comprises a switching information generation predictor 301B, and the switching information generation predictor 301B of FIG. 20 comprises a reference switching predictor 305B. The reference switching predictor 305B of FIG. 21 comprises a filter processor 113 inside, and the restored image signal 20 can generated by acquiring the local decoded image signal 16 and the filter coefficient information 17 with the filter processor 113. Further, the video decoding apparatus 4001 of FIG. 22 comprises a reference switching predictor 401B. The reference switching predictor 401B of FIG. 23 comprises a filter processor 208 inside, and the restored image signal 20 can be generated by acquiring the filter coefficient information 17 with the filter processor.

In this way, the construction of the video encoding apparatus 3001 and video decoding apparatus 4001 can reduce a memory size necessary for the restored image buffer and realize the same operation as the video encoding apparatus 3000 and video decoding apparatus 4000.

In addition, this video encoding apparatuses 3000, 3001 and the video decoding apparatuses 4000, 4001 also can be realized by using general-purpose computer equipment as a base hardware. In other words, the switching information generation predictor 301, the loop filter processor 302, the local decoded image buffer 303, the restored image buffer 304, the reference switching predictor 305, the prediction signal generator 101, the subtracter 102, the transform/quantization module 103, the entropy encoder 104, the inverse transform/dequantization module 105, the adder 106, the encoding controller 109, the filter setting module 110, the switching information generator 112, the filter processor 113, the loop filter switch module 114, the reference switching predictor 401, the decoded image buffer 402, the restored image buffer 403, the entropy decoder 201, the inverse transform/dequantization module 202, the prediction signal generator 203, the adder 204, the decoding controller 206, the filter processor 208 and the loop filter switch module 209 can be realized by making a processor mounted on the computer equipment execute a program. In this time, the video encoding apparatuses 3000, 3001 and video decoding apparatuses 4000, 4001 may be realized by installing the program in the computer equipment beforehand, or may be realized by distributing the program by storing it in a storing medium such as CD-ROM or running through a network and installing this program in the computer equipment appropriately. Further, the local decoded image buffer 303, the restored image buffer 304, the decoded image buffer 402 and the restored image buffer 403 can be realized by using a memory built-in the computer equipment or mounted outside it, a hard disk or a memory medium such as CD-R, CD-RW, DVD-RAM, DVD-R, appropriately.

(Third embodiment)

A video encoding apparatus concerning the third embodiment is explained referring to FIG. 24. Components of FIG. 24 are described respectively hereinafter.

The video encoding apparatus 5000 shown in FIG. 24 comprises a loop filter processor 501, a prediction signal generator 101, a subtracter 102, a transform/quantization module 103, an entropy encoder 104, an inverse transform/dequantization module 105, an adder 106, a reference image buffer 108, and is controlled with an encoding controller 109.

The prediction signal generator 101, subtracter 102, transform/quantization module 103, entropy encoder 104, inverse transform/dequantization module 105, adder 106, reference image buffer 108 and encoding controller 109 operate similarly to the components of the same reference numbers in the video encoding apparatus 1000 of FIG. 1 concerning the first embodiment, and thus further explanation is omitted here.

The loop filter processor 501 receives a local decoded image signal 16 and an input image signal 10, and outputs a reference image signal 19 and filter coefficient information 17. The loop filter processor 501 is described in detail below.

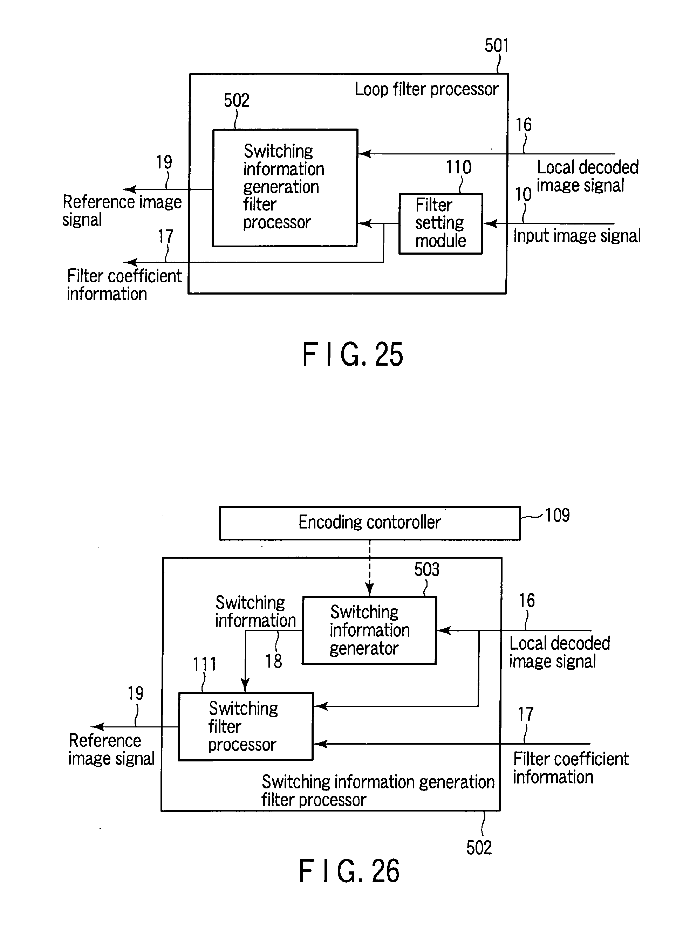

Next, the loop filter processor 501 of the video encoding apparatus concerning the third embodiment is described in detail referring to FIGS. 25 and 26. The components of FIGS. 25 and 26 are described respectively.

The loop filter processor 501 shown in FIG. 25 comprises a filter setting module 110, and a switching information generation filter processor 502, and further the switching information generation filter processor 502 comprises a switching filter processor 111 and a switching information generator 503 as shown in FIG. 26. The filter setting module 110 and switching filter processor 111 operate similarly to the components of the same reference numbers in the loop filter processor 107 of FIG. 2 concerning the first embodiment, and thus further explanation is omitted here.

The switching information generator 503 is controlled with the encoding controller 109, receives the local decoded image signal 16, and produces switching information 18 according to a given switching determination method. The generated switching information 18 is input to the switching filter processor 111. The switching determination method is described hereinafter.

The above is a configuration of the video encoding apparatus concerning the third embodiment.

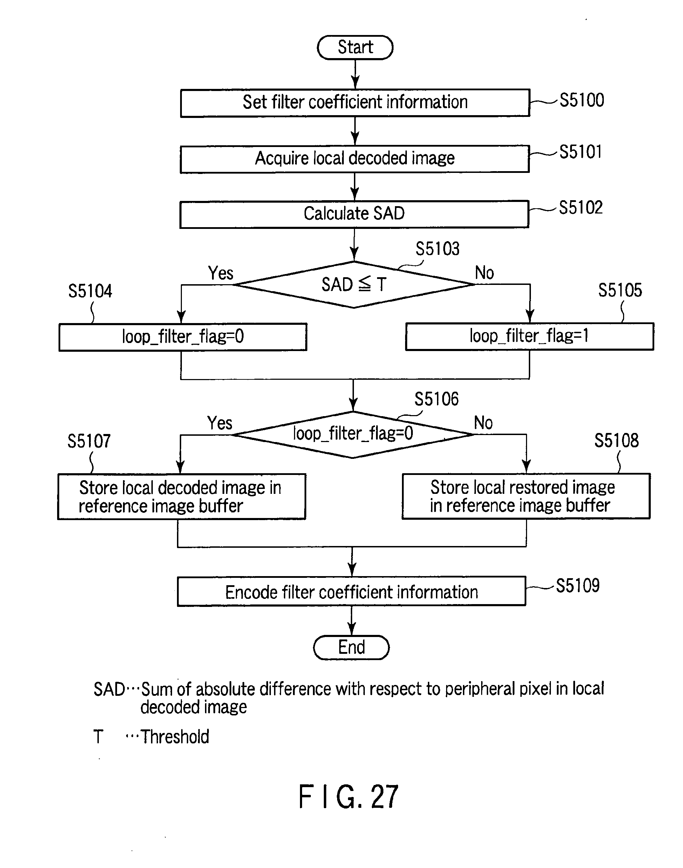

Next, there will be described in detail an operation of the loop filter of the video encoding apparatus concerning the third embodiment referring to FIGS. 25, 26 and 27. In addition, FIG. 27 is a flowchart illustrating an operation of the loop filter of the video encoding apparatus 5000 concerning the third embodiment.

At first, the filter setting module 110 shown in FIG. 25 acquires the local decoded image signal 16 and the input image signal 10, and sets the filter coefficient information 17 (step S5100). The filter setting module 110 uses two-dimensional Wiener filter conventionally used in image restoration, designs a filter coefficient so that a mean square error between the input image signal 10 and an image signal obtained by subjecting the local decoded image signal 16 to filter processing is minimum, and sets a value indicating the designed filter coefficient and the filter size as the filter coefficient information 17, here. The set filter coefficient information 17 is output to the switching information generation filter processor 502 shown in FIG. 25, and output to the entropy encoder 104.

Next, the switching information generator 503 provided inside the switching information generation filter processor 502 shown in FIG. 26 acquires the local decoded image signal 16 (step S5101). The switching information generator 503 calculates a sum of absolute difference SAD of a pixel of interest in the local decoded image signal 16 and a peripheral pixel thereof in units of a pixel (step S5102). Assuming that a coordinate of pixel in the local decoded image is x, y and the local decoded image is F (x, y), SAD is expressed by the following equation.

[Equation 4]

$$SAD = \sum_{j=-1}^{1}\sum_{i=-1}^{1}\left|F(x, y) - F(x + i, y + j)\right|$$

Next, the following switching determination processing is done using SAD and the threshold value T set to the encoding controller 109 beforehand (step S5103). If SAD is not more than T, 0 is set to loop_filter_flag which is the switching information 18 (step S5104). In contrast, if SAD is more than T, 1 is set to loop_filter_flag which is the switching information 18 (step S5104). The switching information 18 is obtained in units of a pixel, but, as another embodiment, the switching determination processing may be determined in units of a frame or a slice or in units of a macroblock or a block of the size different from the macroblock. In that case, the switching information 18 is output in a unit corresponding to it.

Further, the sum of absolute difference of an object pixel and a peripheral pixel is used here, but, as other embodiments, a sum of squared difference may be used. If it is an index that can be calculated from the local decoded image, an index such as an activity, a space frequency, an edge intensity, an edge direction may be used. Further, the index is calculated from the local decoded image here, but the index may be calculated from a restored image obtained by subjecting the local decoded image to filter processing. Further, as another embodiment, the switching determination processing may be done based on a quantization parameter which is part of encoded information or a block size, a prediction mode, a motion vector, a transform coefficient, etc.

Next, the switching filter processor 111 shown in FIG. 26 acquires the local decoded image signal 16 and the filter coefficient information 17 as well as the generated switching information 18, and outputs the reference image signal 19 by doing an operation similar to that of step S1107 to step S1109 FIG. 4 in the video encoding apparatus 1000 concerning the first embodiment. In other words, the loop filter switch module 114 of FIG. 3 acquires loop_filter_flag which is the generated switching information 18, and switches the inner switch SW based on the value of loop_filter_ flag (step S5106). If loop_filter_flag is 0, the loop filter switch module 114 connects the switch SW to the terminal A, whereby the local decoded image signal 16 is temporally stored in the reference image buffer 108 as the reference image signal 19 (step S5107). On one hand, if loop_filter_flag is 1, the loop filter switch module 114 connects the switch SW to the terminal B, whereby the decoded image signal 20 is temporally stored in the reference image buffer 108 as the reference image signal 19 (step S5108).

At last, the filter coefficient information 17 generated with the filter setting module 110 is encoded with the entropy encoder 104, and multiplexed to a bit stream along with the quantized transform coefficient 13, prediction mode information, block size switching information, a motion vector, a quantization parameter, and then transmitted to the video decoding apparatus 6000 to be described below (step S5109). In this time, the filter coefficient information 17 is recited in the loop filter data syntax (1906) belonging to the slice level syntax (1903) in the syntax structure of FIG. 31 as shown in FIG. 32(b). The filter_coeff [cy][cx] of FIG. 32(b) which is the filter coefficient information 17 is a two-dimensional filter coefficient, and filter_size_y and filter_size_x are values for determining a filter size. The value indicating the filter size is recited in the syntax here, but, as another embodiment, a predetermined fixed value may be used as a filter size without reciting it in the syntax. However, when the filter size is set to a fixed value, it should be noted that the similar value must be used in the video encoding apparatus 5000 and a video decoding apparatus 6000 to be described below.

The above is explanation on an operation concerning the loop filter of the video decoding apparatus 5000.

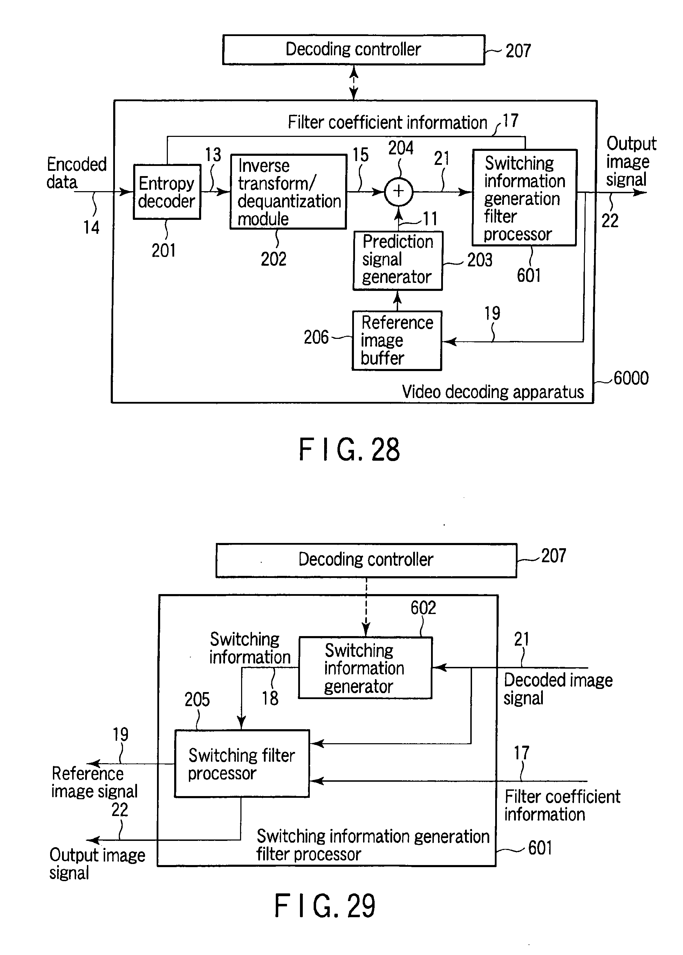

Next, the video decoding apparatus corresponding to the video encoding apparatus 6000 is explained. The video decoding apparatus concerning the third embodiment is explained referring to FIG. 28. Components of FIG. 28 are described respectively hereinafter.

The video decoding apparatus 6000 shown in FIG. 28 comprises a switching information generation filter processor 601, an entropy decoder 201, an inverse transform/dequantization module 202, a prediction signal generator 203, an adder 204, a reference image buffer 206 and is controlled with a decoding controller 207.

The entropy decoder 201, inverse transform/dequantization module 202, prediction signal generator 203, adder 204, reference image buffer 206 and decoding controller 207 operate similarly to components of the same reference numbers in the video decoding apparatus 2000 of FIG. 5 concerning the first embodiment, and thus further explanation is omitted.

The switching information generation filter processor 601 acquires the decoded image signal 21 and the filter coefficient information 17, and outputs the reference image signal 19 and the image signal 22. The switching information generation filter processor 601 is described in detail hereinafter.

Next, the switching information generation filter processor 601 of the video decoding apparatus concerning the third embodiment is described in detail using FIG. 29. Components of FIG. 29 are described respectively hereinafter.

The switching information generation filter processor 601 shown in FIG. 29 comprises a switching information generator 602 and a switching filter processor 205. The switching filter processor 205 operates similarly to components of the same reference numbers in the video decoding apparatus 2000 of FIG. 5 concerning the first embodiment, and thus further explanation is omitted here.

The switching information generator 602 is controlled with the decoding controller 207, acquires the decoded image signal 21, and generates the switching information 18 according to a given switching determination method. The generated switching information 18 is input to the switching filter processor 205. The switching determination method is described hereinafter.

The above is a configuration of the video decoding apparatus concerning the third embodiment.

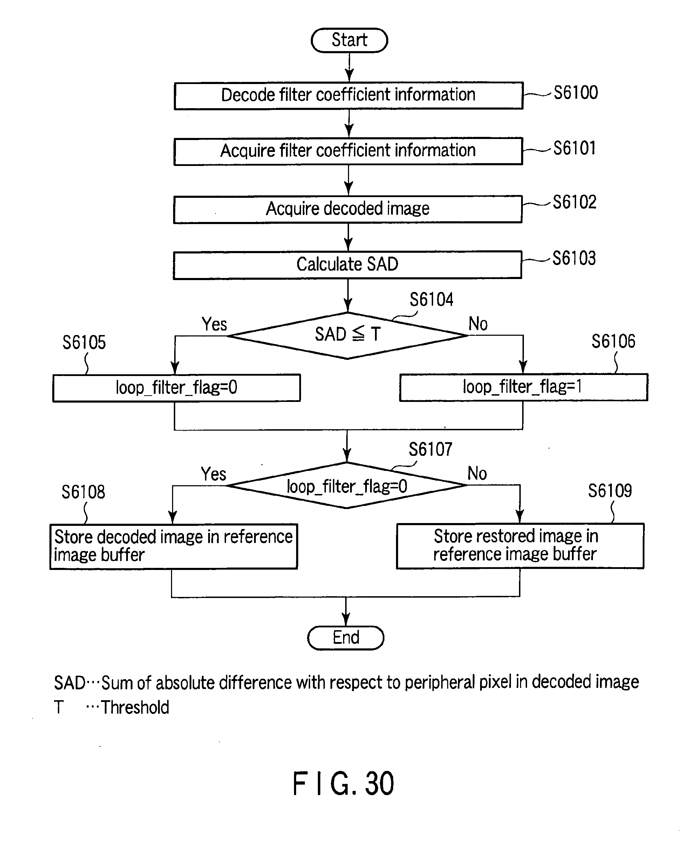

The operation of the video decoding apparatus concerning the third embodiment is described in detail using FIGS. 28, 29 and 30. FIG. 30 is a flowchart indicating an operation of the loop filter of the video decoding apparatus 6000 concerning the third embodiment.

At first, the entropy decoder 201 decodes the filter coefficient information 17 according to the syntax structure of FIG. 31 (step S6100).

The loop filter data syntax (1906) belonging to the slice level syntax (1903) in the syntax structure of FIG. 31 recites the filter coefficient information 17 as shown in FIG. 32(b).

The filter_coeff [cy][cx] of FIG. 32(b) which is the filter coefficient information 17 is a two-dimensional filter coefficient, and filter_size_y and filter_size_x decide values for determining a filter size, here. The value indicating a filter size is recited in the syntax, but as another embodiment, a predetermined fixed value may be used as a filter size without reciting it in the syntax, here. However, when the filter size is set to a fixed value, it should be noted that the similar value must be used in the video encoding apparatus 5000 and video decoding apparatus 6000.

The switching information generation filter processor 601 acquires the decoded filter coefficient information 17 (step S6101). Further, the switching information generation filter processor 601 acquires the decoded image signal 21 acquired from the adder 204 (step S6102). The switching information generator 602 provided inside the switching information generation filter processor 601 shown in FIG. 29 calculates a sum of absolute difference SAD of a pixel of interest in the decoded image signal 21 and a peripheral pixel thereof in units of a pixel (step S6103). Assuming that a coordinate of the pixel in the decoded image is x, y and the decoded image is F(x, y), SAD is expressed by [equation 4].

Using SAD and the threshold value T set to the decoding controller 207 beforehand, the following switching determination processing is done (step S6104).

It should be noted that the threshold value T uses the same value as the threshold value T set with the video encoding apparatus 5000. If SAD is not more than T, 0 is set to loop_filter_flag which is the switching information 18 (step S6105). If SAD is more than T, 1 is set to loop_filter_flag which is the switching information 18 (step S6106). The switching information 18 is obtained in units of a pixel here, but, as another embodiment, the switching determination processing may be determined in units of a frame or a slice or in units of a macroblock or a block of the size different from the macroblock. In that case, the switching information 18 is output in a unit corresponding to it.

Further, the absolute difference value sum of an object pixel and a peripheral pixel is used here, but, as other embodiments, a difference square-sum may be used. If it is an index that can be calculated from the local decoded image, an index such as an activity, a space frequency, an edge intensity, an edge direction may be used. Further, the index is calculated from the decoded image here, but the index may be calculated from the restored image obtained by subjecting the decoded image to filter processing.

Further, as another embodiment, the switching determination processing may be done based on a quantization parameter which is part of encoded information or a block size, a prediction mode, a motion vector, a transform coefficient, etc. In any event, it should be noted that the switching information generator 602 in the video decoding apparatus 6000 must do switching determination processing similar to the switching information generator 503 in the video encoding apparatus 5000.

The switching filter processor 205 shown in FIG. 29 acquires the decoded image signal 21 and the filter coefficient information 17 as well as the generated switching information 18, and outputs the reference image signal 19 by doing an operation similar to the operation from step S2103 to step S2105 of FIG. 7. In other words, the loop filter switch module 205A of FIG. 6 acquires loop_filter_flag which is the generated switching information 18, and switches the inner switch SW based on value of loop_filter_flag (step S6107). If the loop_filter_flag is 0, the loop filter switch module 205A connects the switch SW to the terminal A, and temporally stores the decoded image signal 21 in the reference image buffer 206 as the reference image signal 19 (step S6108). On one hand, If the loop_filter_flag is 1, the loop filter switch module 205A connects the switch SW to the terminal A, and temporally stores the restored image signal 21 in the reference image buffer 206 as the reference image signal 19 (step S6108).

As described above, the switching information generation filter processor 601 generates the switching information 18 by an operation similar to the switching information generation filter processor 502 of FIG. 26 in the video encoding apparatus concerning the third embodiment using the acquired decoded image signal 21, and outputs the reference image signal.

The above is explanation on an operation concerning the loop filter of the video decoding apparatus 6000.

In this way, according to the video encoding apparatus related to the third embodiment, the picture quality of the reference image can be improved by doing the filter processing by setting filter coefficient information of the loop filter so that an error between the input image and the prediction signal is minimum. Further, by switching which of the local decoded image 16 and the restored image signal 18 is to be held as a reference image for every local region, using an index calculated from the local decoded image signal 16, the propagation of picture quality degradation due to filtering can be prevented and encoding efficiency can be improved.

Further, according to the video decoding apparatus related to the third embodiment, by performing the filter processing using the filter coefficient information similar to the video encoding apparatus, and doing the similar switching determination processing, it can be guaranteed that the reference image in the video encoding apparatus synchronizes with the reference image in the video decoding apparatus.

Further, according to the video encoding apparatus and video decoding apparatus concerning the third embodiment, generating the switching information based on the index capable of calculating from the local decoded image on the encoding side allows the similar switching information to be calculated from the decoded image on the decoding side. Therefore, the number of encoded bits when the switching information is encoded can be reduced.

In addition, with reference to the video decoding apparatus 6000 concerning the third embodiment, the decoded image 21 or the reference image 19 may be output as the output image signal 22 if the switching filter processor 205 is configured as shown in FIG. 8 or 9 similarly to the video decoding apparatus 2000 concerning the first embodiment.

Further, when the switching filter processor 205 is configured as shown in FIG. 10 and the switching information generator generates switching information for a post filter newly, the output image signal 22 may be switched by switching the switch SW2 provided in the post filter switching module 210 of FIG. 10.

In addition, the video encoding apparatus 5000 concerning the third embodiment and video decoding apparatus 6000 performs filer processing on the local decoded image signal 16, but they may use the local decoded image signal subjected to conventional deblocking filter processing. In addition, the video encoding apparatus 5000 and video decoding apparatus 6000 can be realized by using general-purpose computer equipment as a basic hardware. In other words, the loop filter processor 501, switching information generation filter processor 502, switching information generator 503, prediction signal generator 101, subtracter 102, transform/quantization module 103, entropy encoder 104, inverse transform/dequantization module 105, adder 106, reference image buffer 108, encoding controller 109, filter setting module 110, switching filter processor 111, switching information generation filter processor 601, switching information generator 602, entropy decoder 201, inverse transform/dequantization module 202, prediction signal generator 203, adder 204, switching filter processor 205, reference image buffer 206 and decoding controller 207 can realize by making a processor mounted on the computer equipment execute a program. In this time, the video encoding apparatus 5000 and the video decoding apparatus 6000 may be realized by installing the program in the computer equipment beforehand, or may be realized by distributing the program by storing it in a storing medium such as CD-ROM or running through a network and installing this program in the computer equipment appropriately. Further, the reference image buffer 108 and reference image buffer 206 can be realized by utilizing appropriately a memory built-in or externally mounted on the computer equipment, a hard disk, or a storing medium such as CD-R, CD-RW, DVD-RAM, DVD-R.

(Fourth embodiment)

The first embodiment illustrates an example of setting the switching information in units of a macroblock of 16x16 pixels. On one hand, the unit in which the switching information in the present embodiment is set is not limited to the macroblock unit but may use a sequence, a frame or a slice or a pixel block that is obtained by partitioning a frame.

In the present embodiment, there will be explained a method for changing a size of a pixel block appropriately by defining a unit for setting switching information as every pixel block in the encoding and decoding method concerning the first embodiment.

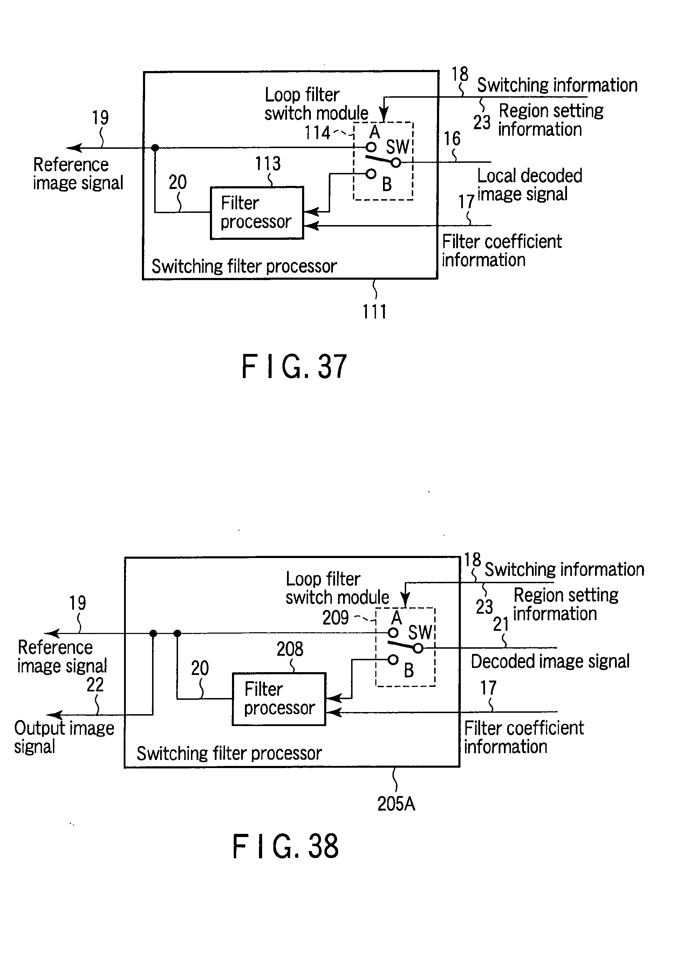

The switching filter processor 111 of the encoding apparatus and decoding apparatus concerning the fourth embodiment is described using FIGS. 37 and 38. The switching filter processor 111 of FIGS. 37 and 38 is modification of the switching filter processor 111 of FIGS. 3 and 6, and is configured to execute filter processing only when the restored image 20 is used as a reference image with the switch SW. In other words, in FIG. 37, the switch SW is provided before the filter processor 113, the terminal A of the switch SW is led to the reference image buffer 108 directly, and the local decoded image signal 16 is stored in the buffer 108 as a reference image signal as it is. The terminal B of the switch SW is led to the reference image buffer 108 through the filter processor 113, and the local decoded image signal 16 is filtered according to the filter coefficient information 17 with the filter processor 113 and then is stored in the buffer 108 as a reference image signal. Further, in FIG. 38, the switch SW is provided on the previous stage of the filter processor 208, and the terminal A of the switch SW is directly led to the output line and the decoded image signal 21 is output to the output line as it is. The terminal B of the switch SW is led to the output line through the filter processor 208, and the decoded image signal is filtered according to filter coefficient information 17 with the filter processor 208 and then output as the reference image signal 19 and the output image signal 22 to the output line. Since the filter processor 113 or 208 performs the filter processing only when loop_filter_flag which is the switching information 18 is 1, such the configuration can be reduced in cost compared with the configuration of FIG. 3 and FIG. 6. It goes without saying that the modifications of FIGS. 37 and 38 can be applied to the first to third embodiments.

The switching filter processor 111 of FIGS. 37 and 38 related to the present embodiment comprises the filter processor 113 and the loop filter switch module 114 similarly to the switching filter processor 111 of the first embodiment described above, acquires the local decoded image signal 16 or the decoded image signal 21, the filter coefficient information 17 and the switching information 18, and outputs the reference image signal 19. Further, in the present embodiment, the region setting information 23 is acquired at the same time and input to the loop filter switch module 114.

The region setting information 23 is information for controlling a timing at which the switch SW is switched according to a block size, and indicates a block size when a frame is partitioned into rectangular blocks.

The region setting information 23 may use a self value of the block size, and also it may be an index in a region size prescribed table for determining the block size prepared before.

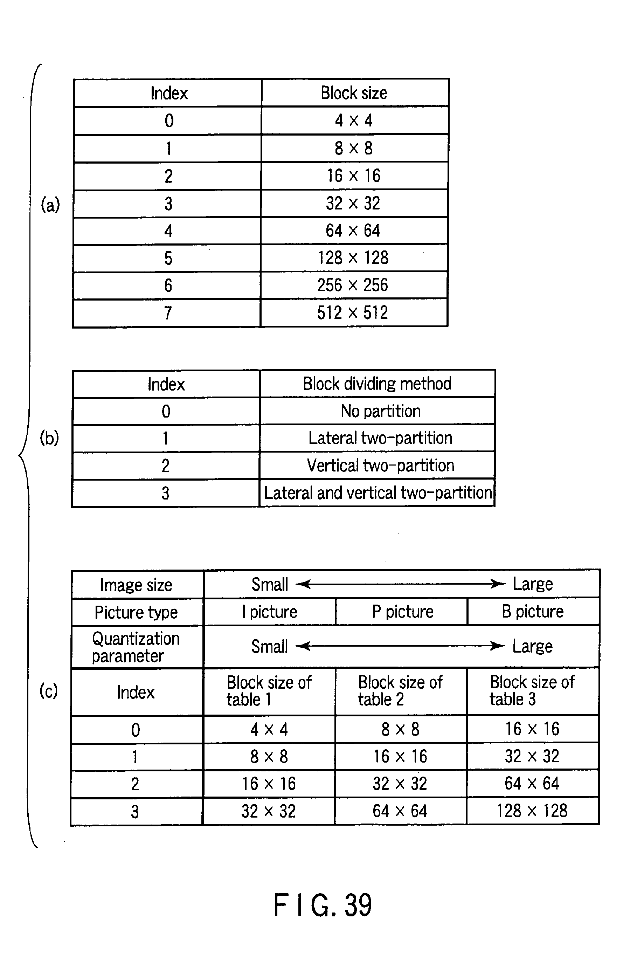

An example of the region size prescribed table is shown in FIG. 39(a). In the region size prescribed table of FIG. 39(a), the index of a square block of 4 pixels in lateral and vertical, which is the smallest block size, is set to 0, and 8 block sizes are prepared for by increasing by 2 times the number of pixels on each side up to 512x512 pixels. By retaining the same region size prescribed table on the encoding and decoding sides, the index determined by the region size prescribed table of FIG. 39(a) is encoded as block information on the encoding side, and the block size is determined from the block information decoded using the same region size prescribed table on the decoding side. In addition, the region size prescribed table (a) is provided in the encoding controller and the decoding controller.

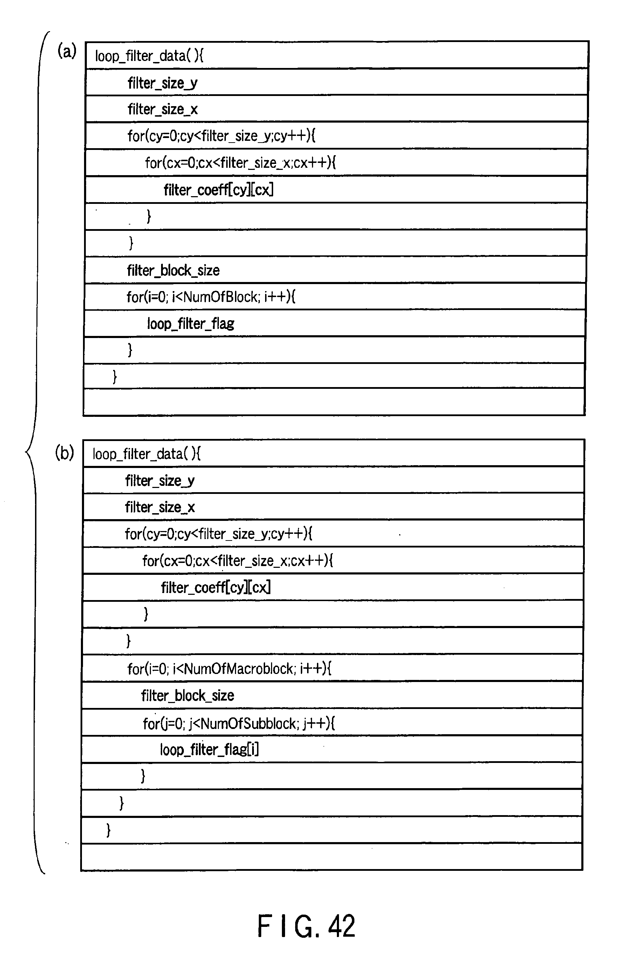

Next, the syntax including the region setting information 23 concerning the present embodiment is described using FIG. 42. The loop filter data syntax (1906) in the syntax structure of FIG. 31 concerning the present embodiment is described as shown in FIG. 42, for example. The filter_block_size of FIG. 42(a) indicates the region setting information 23, and NumOfBlock is a total number of blocks in one slice determined by the block size indicated by filter_block_size. For example, in case that the region size prescribed table of FIG. 39(a) is used, when the index which is the region setting information is set to 0, the slice is partitioned in 4x4 pixel block, and loop_filter_flag is encoded for every $4\times4$ pixels block. As a result, in the slice, the switch SW of the switching filter processor 111 can be switched for every 4x4 pixel block on both of the encoding and decoding sides.

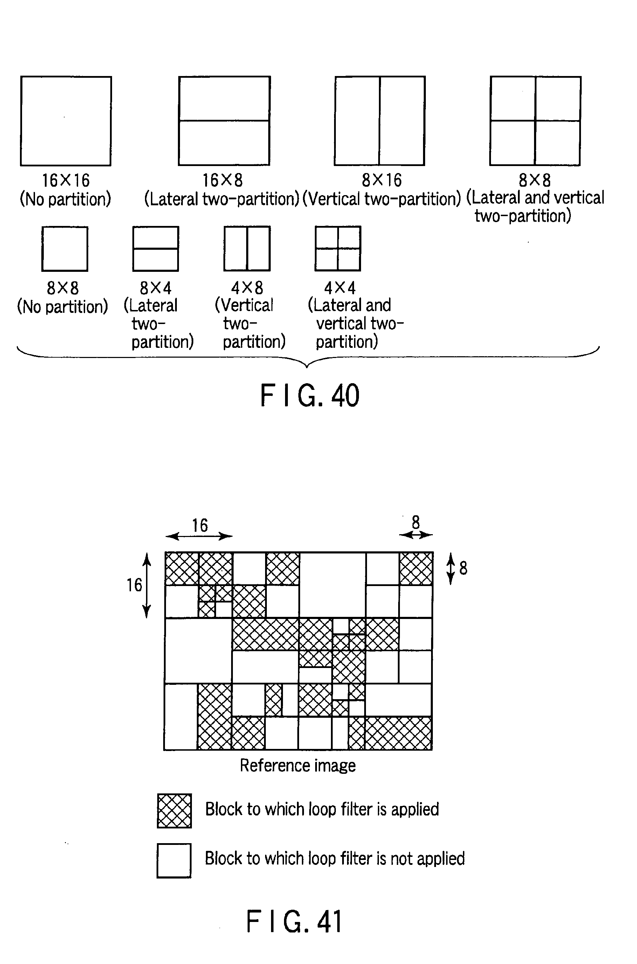

Further, as another embodiment, a partition method to a basic block size may be used as region setting information. For example, like the region size prescribed table of FIG. 39(b), four block partition methods of "no partition", "lateral 2-partition", "vertical 2-partition", and "lateral/vertical 2-partition" are prepared for, and index numbers are assigned to respective methods. As a result, when the basic block size is set to a 16x16 pixel block and a 8x8 pixel block, such block shapes as shown in FIG. 40 can be taken. The syntax on this describes filter_block_size which is the region setting information in a loop of the basic block size as shown in FIG. 42(b), and loop_filter_flag is encoded by NumOfSubblock indicating the number of sub blocks determined by filter_block_size. An example of a reference image when the basic block size is set to 16x16 and 8x8 is shown in FIG. 41. In addition, the region size prescribed table (b) is provided in the encoding controller and the decoding controller.

In this way, according to the video encoding and decoding methods concerning the fourth embodiment, the block partition can have a diversity by setting and encoding the region setting information for partitioning a frame into regions. Setting the switching information to each of partitioned blocks allows a switching timing of filter processing to be controlled for each frame or for each local region of the frame adaptively.

When the block size is switched adaptively, the number of encoded bits necessary for encoding the switching information increases as the block size decreases or the frame is partitioned finely, resulting in degrading an encoding efficiency.

Therefore, a plurality of region size prescribed tables described above may be prepared for, and switched based on given information contributing to the number of encoded bits of the image to which a loop filter is applied and provided from both of the encoding and decoding sides. For example, a plurality of region size prescribed tables are prepared on the encoding controller and the decoding controller, for example, as shown in FIG. 39(c), and the region size prescribed tables can be switched according to the image size, picture type and a quantization parameter for determining roughness of quantization. As for the image size, the region size prescribed table which prepared for a block of larger size is used as the image size increases relatively.

Further, when the picture type is used in a conventional manner, the number of encoded bits tends to be in I picture > P picture > B picture. Therefore, the region size prescribed table which prepared for a block of large size is used for the B picture encoded in a small number of bits.

Further, about the quantization parameter, the number of encoded bits of the transform coefficient decreases as the value of the quantization parameter increases. Therefore, the region size prescribed table which prepared for a block of relatively large size is used.

By switching a plurality of region size prescribed tables which differ in block size as discussed above, it is possible to select a block size more adaptively using a limited index number. Further, a balance between the number of encoded bits of transform coefficient or encoded parameter and the number of encoded bits necessary for the switching information can be controlled effectively.

As further another embodiment, the block information may use a block size synchronized with a motion compensation block size and a transform block size used for encoding and decoding in generating a local decoded image or a decoded image. In this case, a switching timing of filter processing can be changed without reciting block information in the loop filter data syntax (1906), and thus the number of encoded bits needed for the block information can be reduced.

Further, a case that a frame is partitioned into rectangular blocks is described here, but if there is a partition method capable of realizing the same region partition for both of the encoding apparatus and decoding apparatus, it is not limited to the rectangular block.

(Fifth embodiment)

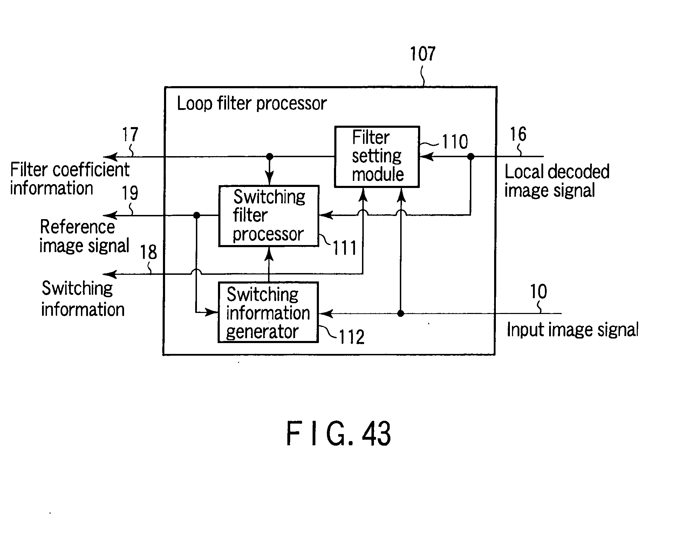

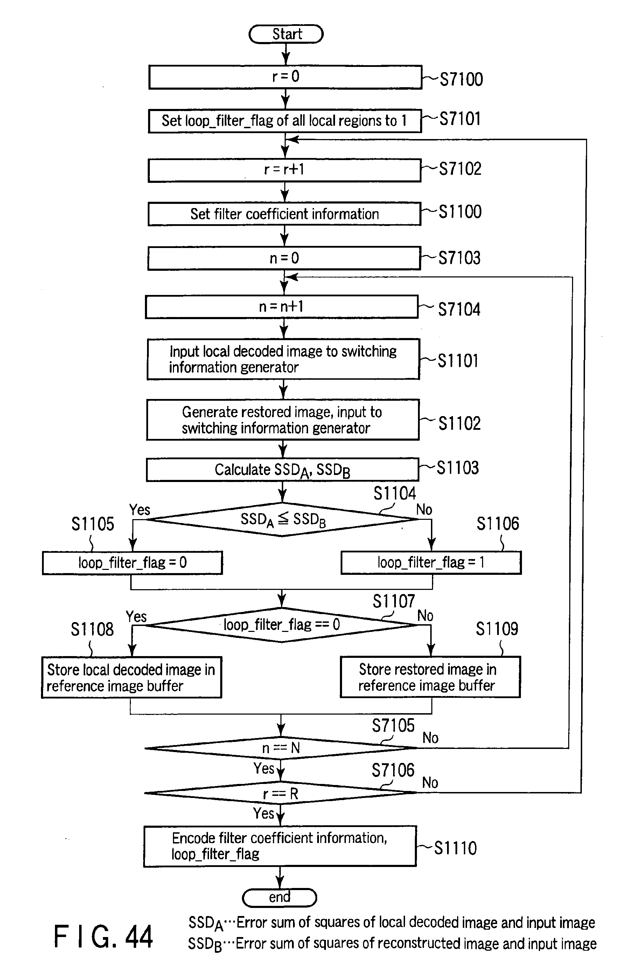

Next, a video encoding method concerning a fifth embodiment is described with reference tot FIGS. 43 and 44.

A loop filter processor 107 of FIG. 43 has a configuration similar to the loop filter processor 107 of FIG. 2 and comprises a filter setting module 110, a switching filter processor 111 and a switching information generator 112. It acquires a local decoded image signal 16 and an input image signal 10 and outputs filter coefficient information 17, switching information 18 and a reference image signal 19.

On one hand, in the present embodiment, the switching information 18 is set for each of local regions obtained by partitioning a frame, and a region to be used for setting a filter is selectively acquired based on the switching information 18.

An operation of the loop filter of the video encoding apparatus concerning the fifth embodiment is described in detail using a flowchart of FIG. 44.

In the flowchart of FIG. 44, R is the maximum value of a number of times of setting filter coefficient information, and N is a total number of local regions obtained by partitioning the frame.

At first, 0 is set to the setting number of times r of filter coefficient information (step S7100), and loop_filter_ flag which is the switching information is set to 1 with respect to all regions (step S7101). Next, r is incremented by only one (step S7102).

Thereafter, the filter setting module 110 of FIG. 43 sets the filter coefficient information (step S1100). A two-dimensional Wiener filter used for image restoration conventionally is used similarly to the first embodiment here, a filter coefficient is designed so that a mean square error between an image (reference image signal 19) obtained by subjecting the local decoded image signal 16 to filter processing and the input image signal 10 is minimum, and a value indicating the designed filter coefficient and the filter size is set as the filter coefficient information 17. The filter setting module 110 of FIG. 43 in the fifth embodiment is assumed to calculate the mean square error using only the region in which loop_ filter_flag which is the input switching information is set to 1 here. Because, in setting of first filter coefficient information of r =1, 1 is set to loop_filter_flag of all regions in step S7101, the filter coefficient information is generated which is designed so that a mean square error of the whole frame is minimum here.

Next, the switching filter processor 111 of FIG. 43 sets the switching information 18 to each of local regions obtained by partitioning a frame. In other words, when the region number is assumed to be n, at first 0 is set to n (step S7103), and n is incremented by only one (step S7104). Next, the n-th region is subjected to processing of step S1101 to step S1109 similar to the first embodiment. The above processing is repeated till n achieves the total N (step S7105).

After loop_filter_flag was set to all regions of the frame, the above serial processing is repeated till the setting number of times r of filter coefficient information reaches the predetermined maximum value R of the number of times of setting filter coefficient information (step S7106). According to the video encoding method concerning the fifth embodiment in this way, the setting of filter coefficient information on and after the second time makes it possible to set a filter making a mean square error minimize for a limited region in which loop_filter_flag is set to 1. For example, when the reference image provided by the switching information set in the first time is as shown FIG. 33, the second setting of the filter coefficient information can set a filter making the mean square error minimum only for "the macroblock to which the loop filter is applied". As a result, a filter having a more effective movement of picture quality can be set to "the macroblock to which the loop filter is applied".

In addition, the present invention is not limited to the above first to third embodiments as is, and can be realized by modifying components without departing from the scope of the invention. Further, various kinds of invention can be formed by an appropriate combination of a plurality of components disclosed by the embodiment. For example, some components may be deleted from all components shown in the embodiment. Further, components over different embodiments may be combined appropriately.

(Sixth embodiment)

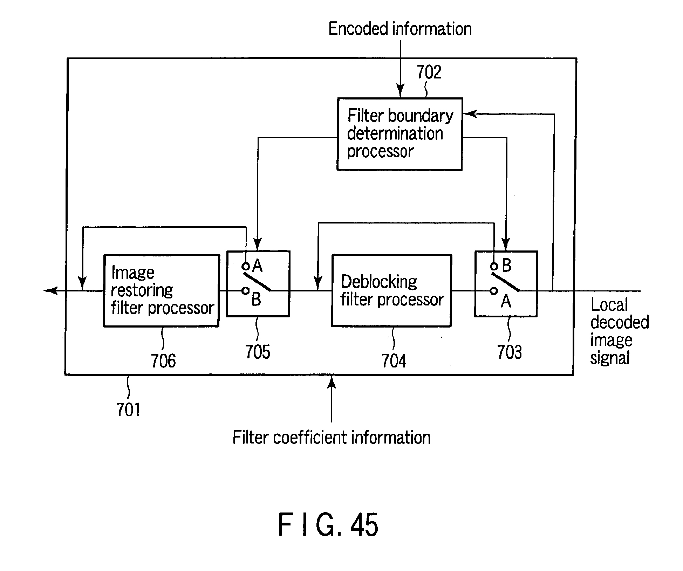

There will be explained a video encoding apparatus and video decoding apparatus related to the sixth embodiment. FIG. 45 shows a filter processor provided on both of the video encoding apparatus and the video decoding apparatus, and illustrates a filter processor 113 of the first and second embodiments and a filter processor corresponding to the filter processor 208 in the third embodiment and the fourth embodiment.

In the case of the video encoding apparatus, a local decoded picture signal, switching information, filter information and encoded information are input to a local decoded image filter processor 701 of FIG. 45, and in the case of the video decoding apparatus, a decoded image signal, switching information, filter information and encoded information are input thereto, and a reference image signal is generated. The filter processor 701 comprises a filter boundary determination processor 702, a switch 703, a deblocking filter processor 704, a switch 705 and an image restoration filter processor 706.

The filter boundary determination processor 702 uses the encoded information from the local decoded picture signal or the decoding image set signal, and determines a pixel to be subjected to deblocking filter processing from among pixels on the boundary of the block that is a unit of transform processing or motion compensation to control the switch 703 and switch 705. In this time, the filter boundary determination processor 702 connects the switch 703 and switch 705 to the terminal A when it determined that the input pixel is a block boundary pixel, and the deblocking filter processor 704 subjects the pixel signal to deblocking filter processing. When it is determined that the input pixel is not a block boundary pixel, switch 703 and switch 705 is connected to terminal B, and the image restoration filter processor 706 subjects the input pixel to image restoration filter processing.

The deblocking filter processor 704 uses a filter coefficient generated beforehand or filter coefficient information given from the outside of the local decoded image filter processor 701 and subjects a pixel determined as a block boundary by the block boundary determination processor 702 to such filter processing (for example, averaging procedure of a pixel signal) as to cancel a block distortion occurring due to transform processing or motion compensation processing.

The image restoration filter processor 706 performs restoration processing on the local decoded image with respect to a pixel determined as not a block boundary by the block boundary determination processor 702, based on the filter coefficient information given from the outside of the local decoded image filter processor 701. The image restoration filter processor 706 is assumed to be replaced with the switching filter processor 111, 205A, 205B, 205C or 205D of FIGS. 3, 6, 8, 9 and 10 of the first embodiment and, the filter processor 113 or 208 of FIGS. 14 and 16 of the second embodiment, the reference switching predictor 305B or 401B of FIGS. 21 and 23 of the second embodiment, the switching information generation filter processors 502 or 601 of FIGS. 26 and 29 of the third embodiment, and the switching filter processor 111 or 205A of FIGS. 37 and 38 of the fourth embodiment as it is.

According to the sixth embodiment in this way, a block boundary area can be subjected to filter processing taken into consideration a difference of a nature of the decoded image signal due to a block distortion caused by transform processing or motion compensation processing, and improve a restoration performance of the whole image.

(Seventh embodiment)

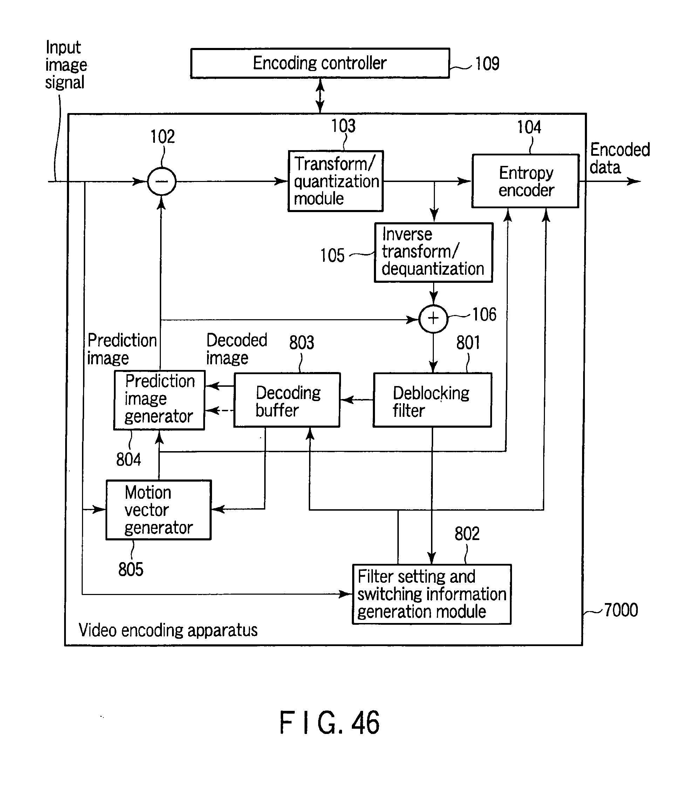

Next, the video encoding apparatus and decoding apparatus related to the seventh embodiment will be described referring to FIGS. 46 to 49. At first, the video encoding apparatus concerning the seventh embodiment is explained referring to FIG. 46. Components of FIG. 46 are explained respectively hereinafter.

The video encoding apparatus 7000 shown in FIG. 46 comprises a subtracter 102, a transform/quantization module 103, an entropy encoder 104, an inverse transform/dequantization module 105, an adder 106, a deblocking filter module 801, a filter setting/switching information generator 802, a decoded image buffer 803, a prediction image generator 804, and a motion vector generator 805, and is controlled with an encoding controller 109.

The subtracter 102, transform/quantization module 103, entropy encoder 104, inverse transform/dequantization module 105, adder 106 and encoding controller 109 operate similarly to components of the same reference numbers of the video encoding apparatus 3000 of FIG. 11 concerning the second embodiment, and thus further explanation is omitted here.

Further, the filter setting/switching information generator 802 operates similarly to the filter setting module 110 and switching information generator 112 in the loop filter processor 107 of FIG. 2 concerning the first embodiment.

As a concrete operation, the video encoding apparatus 7000 transforms, quantizes, and entropy-encode a prediction error, and also local-decodes it by dequantization and inverse transform, similarly to the conventional hybrid encoding or the video encoding apparatus 1000 concerning the first embodiment or the video encoding apparatus 3000 concerning the second embodiment. The deblocking filter 801 subjects the local decoded signal to filter processing to eliminate a distortion on the block boundary with the deblolcking filter 801, and then stores the filtered local decoded signal in the decoded image buffer 803. The filter setting/switching information generator 802 receives the filtered local decoded image signal and the input image signal, and produces a filter coefficient and switching information. The filter setting/switching information generator 802 outputs the generated filter coefficient information to the decoded image buffer 803, and outputs to the entropy encoder 104. The entropy encoder 104 encodes the filter coefficient and switching information generated with the filter setting/switching information generator 802, and also multiplexes the quantized transform coefficient with a bit stream along with the prediction mode information, block size switching information, motion vector information, quantization parameter, etc., and transmits to the video decoding apparatus 8000 to be described below. In this time, the filter coefficient information and the switching information are transmitted as encoded information of the input image according to syntax of FIG. 32.

The decoded image buffer 803 stores the local decoded image referred to with the prediction image generator 804 and the filter coefficient corresponding to the local decoded image, and the switching information.

The prediction image generator 804 uses the local decoded image, filter coefficient, switching information managed with the decoded image buffer 803, and the motion vector information generated with the motion vector generator 805, and generates the motion-compensated prediction image. The subtracter 102 generates a prediction error signal between the generated prediction image and the input image. On one hand, the motion vector information is encoded with the entropy encoder 104 and multiplexed with other information.

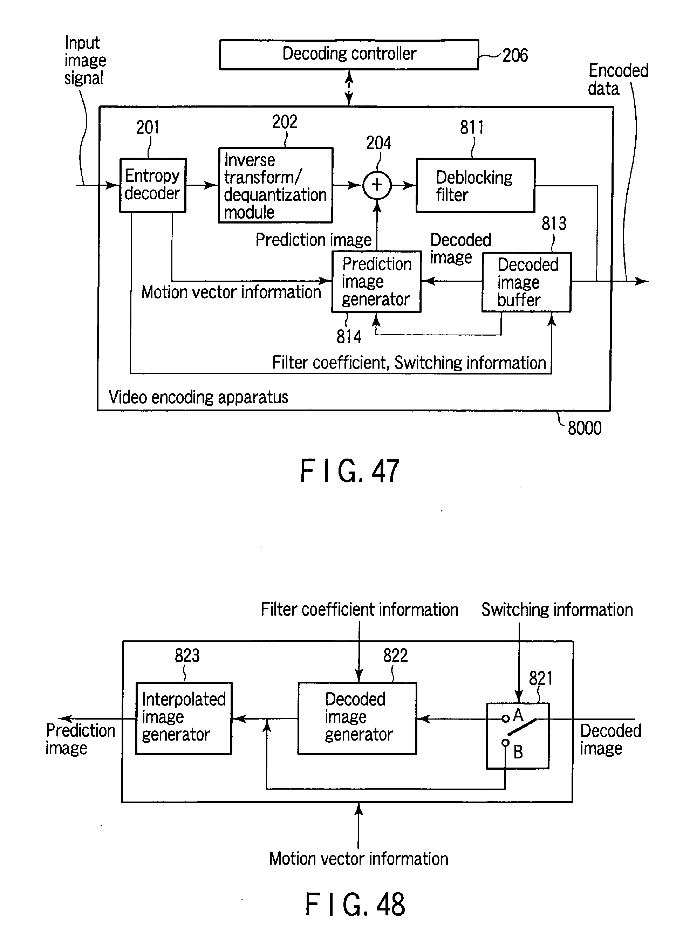

The video decoding apparatus concerning the seventh embodiment is explained referring to FIG. 47. Components of FIG. 47 are explained respectively hereinafter. The video decoding apparatus 8000 shown in FIG. 47 comprises an entropy decoder 201, an inverse transform/dequantization module 202, an adder 204, a deblocking filter 811, a decoded image buffer 813, and a prediction image generator 814, and is controlled with a decoding controller 206.

The entropy decoder 201, inverse transform/dequantization module 202, adder 204 and decoding controller 206 operate similarly to the components of the same references in the video decoding apparatus 2000 concerning the first embodiment, and thus further explanation is omitted.

As a concrete operation, it dequantizes and inverse-transforms a signal decoded with the entropy-decoder 201 to produce a prediction error signal, and generates a decoded image by adding it to a prediction image with the adder 204, similarly to the conventional hybrid encoding or the video decoding apparatus 2000 concerning the first embodiment or the video encoding apparatus 4000 concerning the second embodiment. The deblocking filter 811 subjects the decoded signal to filter processing to eliminate a distortion on a block boundary, and then outputs a decoded image and it is stored in the decoded image buffer 813.

The decoded image buffer 813 stores the decoded image referred to with the prediction image generator 814, the filter coefficient and the switching information corresponding to the decoded image decoded with the entropy decoder 201. The prediction image generator 813 generates a prediction image subjected to restoration filter processing and motion compensation from the motion vector information decoded with the entropy-decoder 2, the decoded image from the decoded image buffer 402, the filter coefficient, and the switching information.

The configuration such as the video encoding apparatus and the video decoding apparatus as shown in FIGS. 46 and 57 can realize improvement of coding efficiency by applying adaptive image restoration processing to motion compensated prediction. FIG. 48 is one embodiment of concrete implementation of the prediction image generator 814 of FIGS. 46 and 47. Components of FIG. 48 are explained respectively hereinafter.

The prediction image generator 804 shown in FIG. 48 comprises a switch 821, a restored image generator 822 and an interpolation picture generator 823. The switch 821 is a switch for switching whether or not the decoded image referred to based on the motion vector information is subjected to the restoration filter processing, and switched based on the switching information generated with the filter setting/switching information generator 802. When the switch 821 is switched to the terminal A, the restored image generator 822 performs the restoration filter processing on the decoded image referred to based on the motion vector information, using the filter coefficient set with the filter setting/switching information generator 802. When the switch 821 is switched to the terminal B, the decoded image is input to the interpolation picture generator 823 as it is. The interpolation picture generator 823 generates an interpolation picture of a fractional pixel position as a prediction image, based on the motion vector. Such a configuration makes it possible to realize combination of the adaptive image restoration processing and the motion compensated prediction.

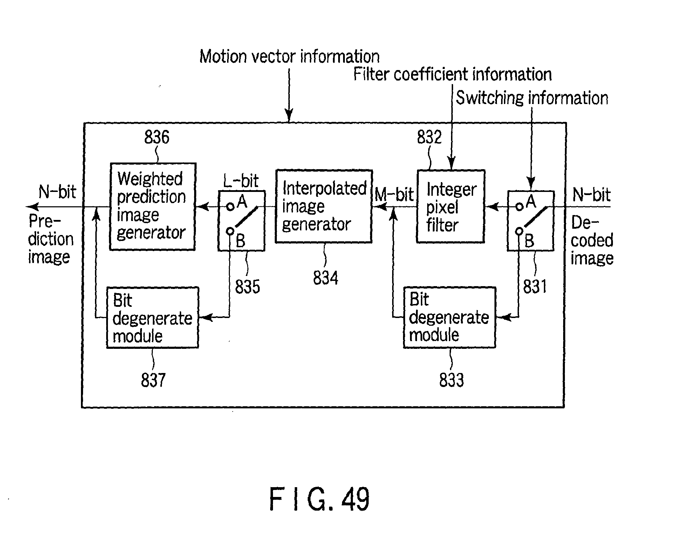

FIG. 49 is another embodiment of concrete implementation of the prediction image generators of FIGS. 46 and 47. Components of FIG. 49 are described respectively hereinafter.

The prediction image generator 804 shown in FIG. 49 comprises a switch 831, an integer pixel filter 832, a bit extension module 833, an interpolation picture generator 834, a switch 835, a weighted prediction image generator 836, and a bit degenerate module 837. The switch 831 is a switch for switching whether or not the decoded image referred to based on the motion vector information is subjected to the restoration filter processing in units of integer pixel, and switched based on the switching information generated with the filter setting/switching information generator 802 of FIG. 46. When the switch 831 is switched to the terminal A, the integer pixel filter 832 performs the restoration filter processing on the decoded image referred to based on the motion vector information, using the filter coefficient set with the filter setting/switching information generator 802. The feature of this time is to make the pixel bit length of the output of the integer pixel filter 832 to be M-bit wherein M≥N, when the pixel bit length of the decoded image is N-bit. When the switch 831 is switched to the terminal B, the decoded image is input to the bit extension module 833, so that the decoded image of N-bit is expanded to be M-bit wherein M≥N. Concretely, the bit extension module 833 does the processing for subjecting a pixel value V to a left arithmetic shift for (M-N) bits.

The interpolation picture generator 834 generates an interpolation picture of a decimal point pixel position based on the motion vector information. The feature of this time is that the input is the pixel bit length of M-bit whereas the output is the pixel bit length of L-bit wherein L≥N. The switch 835 is a switch controlled with the encoding controller 109 or the decoding controller 206 based on the encoded information, and switches whether or not the weighted prediction is done. When switch 835 is switched to the terminal A, the weighted prediction image generator 836 generates a prediction image based on a weighted prediction equation given in H.262/AVC, etc. The feature of this time is that the processing is done so that the output of the pixel bit length of N-bit is obtained with respect to the input of the pixel bit length of L-bit. When the switch 835 is switched to the unit B, the bit degenerate module 847 performs rounding processing so that the input of L-bit is N-bit wherein L≥N.

When the inner of the prediction image generator 804 is configured so as to make the pixel bit length longer than the pixel bit length of the decoded image, a rounding error of calculation in the restoration processing, interpolation processing and weighted prediction processing is reduced, resulting in that generation of the prediction image can be realized with beneficial encoding efficiency.

(Eighth embodiment)

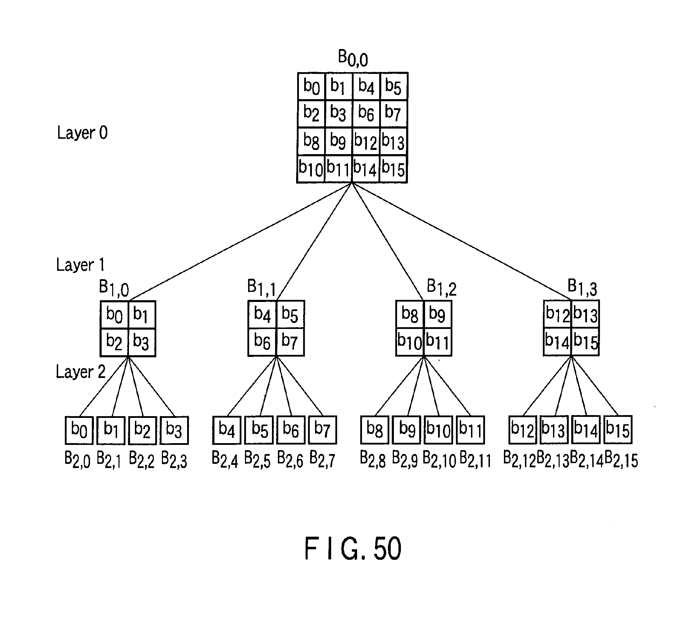

There will be described a method for switching a pixel block size adaptively using region setting information indicating a size of a pixel block or a partition manner where a unit of setting switching information is a pixel block, in the fourth embodiment. In the present embodiment, there is described, as a method for switching pixel block sizes in a frame appropriately, a method for partitioning a parent block of a predetermined size into child blocks of small sizes hierarchically referring to FIGS. 50 to 55.

A method for partitioning a parent block into child blocks hierarchically using a quad-tree structure is described here. FIG. 50 represents a hierarchical block partition by the quad-tree structure. The parent block B0, 0 of hierarchical layer 0 in FIG. 50 is partitioned into children blocks B1, 0 to B1, 3 in a hierarchical layer 1, and is partitioned into children blocks B2, 0 to B2, 15 in a hierarchical layer 2.

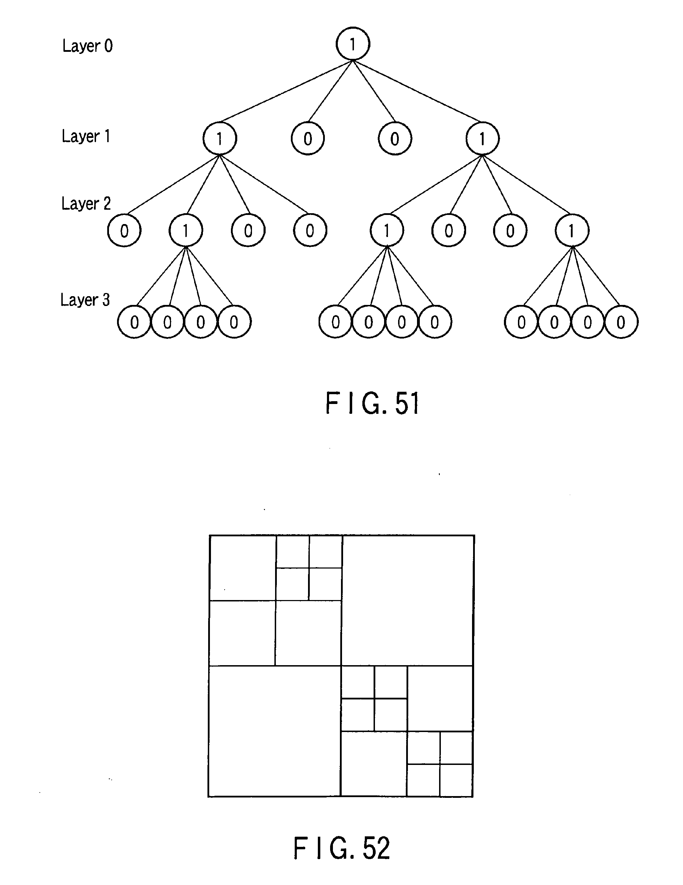

Next, a method for expressing a partition tree of quad-tree structure is described. FIG. 51 illustrates a partition tree to the hierarchical layer 3, using block partition information expressed by 0 or 1. It is illustrated to divide into child blocks of the lower hierarchical layer when the block partition information is 1, and it is illustrated that partition is not done when it is 0. In the block expressed by the block partition information set as shown in FIG. 51, the parent block is partitioned into four child blocks, this child blocks each are partitioned into four child (grandchild) blocks, and this child (grandchild) blocks each are partitioned into four child (great-grandchild) blocks as shown in FIG. 52. The switching information is set to each of the blocks of different sizes partitioned in this way. In other words, it is equal to setting of the switching information to the corresponding block whose block partition information in the partition tree of FIG. 51 is 0.

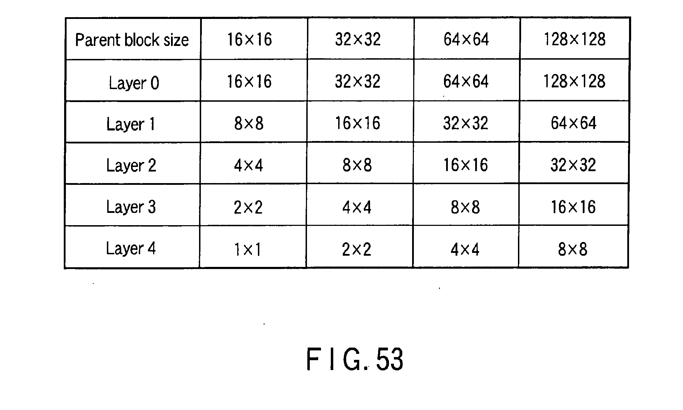

The size of the children block in the parent block is determined by a parent block size and a depth of the hierarchical layer. FIG. 53 is a diagram illustrating the size of each children block of the hierarchical layers 0-4 with respect to the parent block size when the quad-tree structure is used. In FIG. 53, when the children block size is, for example, $32 \times 32$, the size of the child (great-grand child) block of the hierarchical layer 4 is 2x2. The inside of the parent block that is a local region in a frame is partitioned into the children blocks shrinking sequentially with increasing depth of the hierarchical layer.

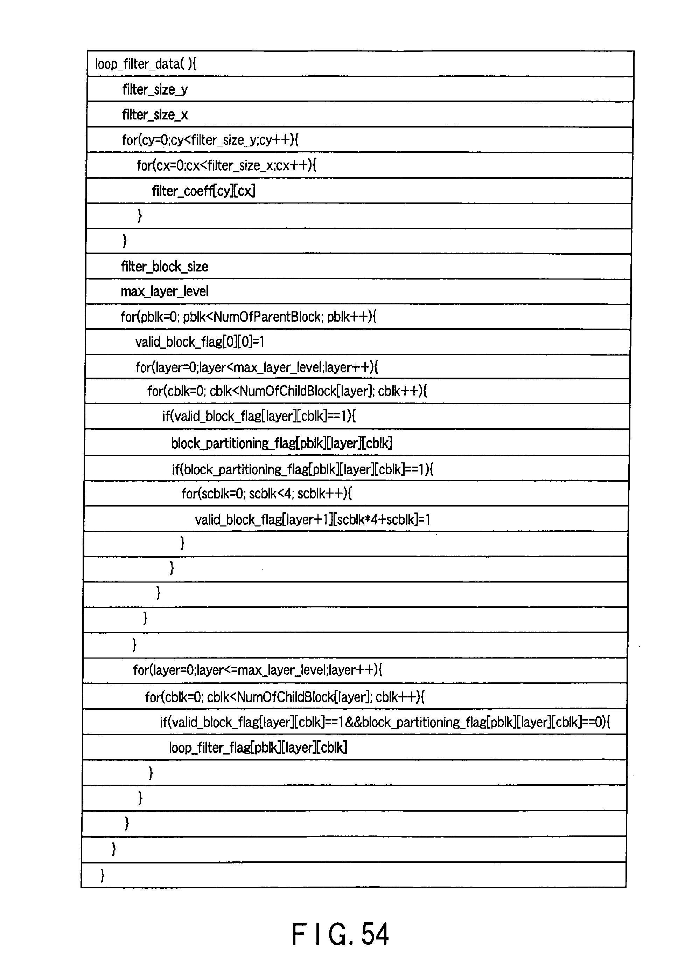

Next, the syntax including region setting information concerning the present embodiment is described using FIG. 54.

The loop filter data syntax (1906) in the syntax structure of FIG. 31 concerning the present embodiment is recited as shown in FIG. 54, for example. The filter_block_size of FIG. 54 is a value for determining a block size similarly to the fourth embodiment, and represents a parent block size here.

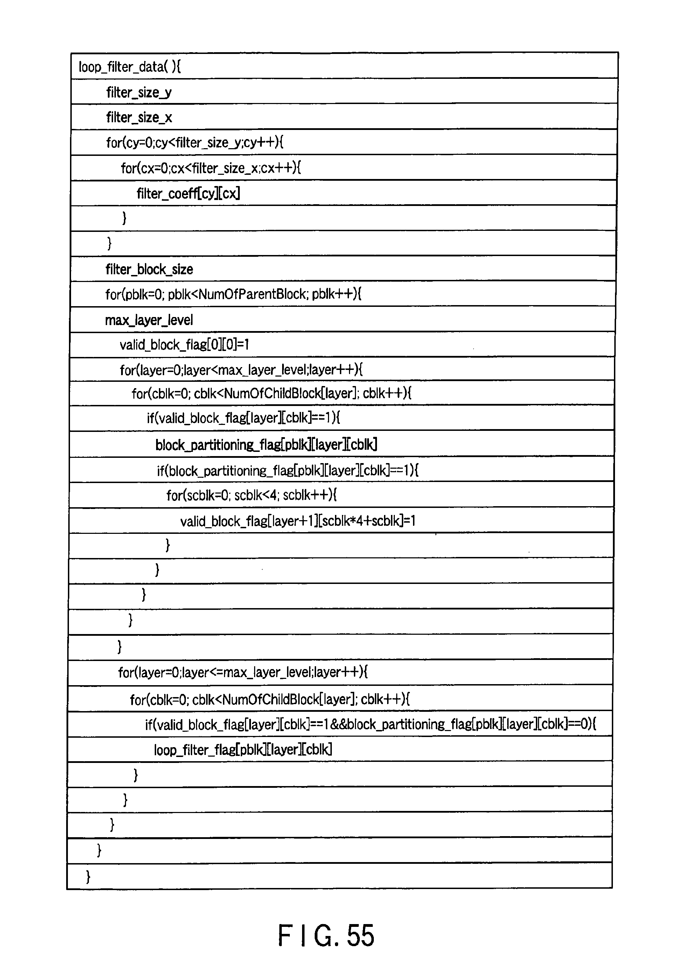

Next, max_layer_level is a value indicating the maximum of depth of the available hierarchical layer. In the present embodiment, max_layer_level is encoded in units of a slice as shown in the syntax of FIG. 54, but, as another embodiment, it may be encoded in units of a sequence, a frame or a parent block. FIG. 55 shows a syntax when encoding is done in units of a parent block. Further, if a value indicating the maximum of depth of the same hierarchical layer is used for both of the encoding apparatus and decoding apparatus, a value set beforehand may be used without including max_layer_level in the syntax.

Further, the parent block size is indicated by filter_block_size in the present embodiment, but may be indicated by a value indicating a size of minimum child block. In that case, the parent block size is calculated by a given equation using max_layer_level and filter_block_size. As an example, assuming that filter_block_size is B, and max_layer_level is L, the parent block size P can be expressed by $P = B \times 2^L$.

Next, NumOfParentBlock is the total of parent blocks in a slice, and NumOfChildBlock [layer] is the total of children blocks of the hierarchical layer indicated by a layer in a parent block. As an example, in the case of quad-tree structure, NumOfChildBlock

[0]=1, NumOfChildBlock [1]=4, NumOfChildBlock [2]=16, NumOfChildBlock [3]=64, and NumOfChildBlock [layer] can be expressed in $_4$layer.

Next, valid_block_flag and block_partitioning_flag are explained. It is assumed that valid_block_flag is 0 or 1, and the initial value of valid_block_flag is set to 0. The block_partitioning_flag is block partitioning information, and set to 1 in the case of partitioning and to 0 in the case of non-partition as explained in the above.

In this way, according to the video encoding and decoding method concerning the eighth embodiment, a basic parent block can be partitioned into child blocks hierarchically by using the hierarchical layer block partitioning information as the region partitioning information, and it is possible to control switching timing of the filter processing appropriately for each local region in the frame by setting the switching information to each of partitioned child blocks. Further, when a unit for setting the switching information is variable in a frame in this way, it is possible to set the switching information efficiently by partitioning finely a region on which the loop filter largely influences picture quality and by partitioning coarsely a region on which the loop filter hardly influences picture quality.

Further, the partitioning method based on the quad-tree structure is described as a partitioning method of parent block here, but if there is a partitioning method which can realize the same region partitioning for both of the encoding apparatus and decoding apparatus, it is not limited to the quad-tree structure.

Further, there is described a case of partitioning a parent block into rectangular blocks hierarchically here, but if there is a partitioning method which can realize the same region partitioning for both of the encoding apparatus and decoding apparatus, it is not limited to the rectangular block.

According to the present invention, in video encoding/decoding of encoding filter coefficient information set on an encoding side and using the filter coefficient information by decoding it on a decoding side, switching loop filter processing by the same processing for the encoding side and decoding side can make picture quality of a reference image used for prediction improve while suppressing propagation of degradation of picture quality and make encoding efficiency improve.

Industrial Applicability

The video encoding and decoding method and apparatus related to the present invention are employed by image compression processing in communication media, a storage media and a broadcast media.

**Claims**

1. A video encoding method, **characterized in that** an encoded image is used as a reference image for prediction of an image to be encoded next, comprising:

   generating a restored image by applying a filter to a local decoded image of an encoded image;
   setting filter coefficient information of the filter;
   encoding the filter coefficient information;
   encoding specific information indicating that the local decoded image or the restored image is used as a reference image; and
   storing the local decoded image or the restored image in a memory as the reference image based on the specific information.

2. A video decoding method, **characterized in that** a decoded image is used as a reference image for prediction of an image to be decoded next, comprising:

   generating a restored image by applying a filter to a decoded image;
   decoding filter coefficient information of the filter;
   decoding specific information indicating the decoded image or the restored image used as a reference image; and
   storing the decoded image or the restored image to a memory as the reference image based on the specific information.

3. A video encoding method, **characterized in that** an encoded image is used as a reference image for prediction of an image to be encoded next, comprising:

   generating a restored image by applying a filter to a local decoded image of an encoded image;

setting filter coefficient information of the filter;

encoding the filter coefficient information;

encoding specific information indicating that the local decoded image or the restored image is used as a reference image; and

using the local decoded image or the restored image as the reference image for prediction based on the specific information.

4. A video decoding method, **characterized in that** a decoded image is used as a reference image for prediction of an image to be decoded next, comprising:

generating a restored image by applying a filter to a decoded image;

decoding filter coefficient information of the filter;

decoding specific information indicating that makes the local decoded image or the restored image is used as a reference image; and

using the decoded image or the restored image as the reference image for prediction based on the specific information.

5. A video encoding method, **characterized in that** an encoded image is used as a reference image for prediction of an image to be encoded next, comprising:

generating a restored image by applying a filter to a local decoded image of an encoded image;

setting filter coefficient information of the filter;

encoding the filter coefficient information; and

storing the local decoded image or the restored image as a reference image in a memory based on specific information indicating that the local decoded image or the restored image is used as the reference image.

6. A video decoding method, **characterized in that** a decoded image is used as a reference image for prediction of an image to be decoded next, comprising:

generating a restored image by applying a filter to a decoded image;

decoding filter coefficient information of the filter;

storing the decoded image or the restored image as a reference image in a memory based on specific information indicating that the local decoded image or the restored image is used as the reference image.

7. The video encoding method according to claim 1 or 3, **characterized by** further comprising encoding, on an encoded side, specific information indicating that the decoded image or the restored image is used as an output image on a decoding side.

8. The video decoding method according to claim 2 or 4, **characterized by** further comprising decoding specific information indicating that the decoded image or the restored image is used as an output image, and outputting the decoded image or the restored image as the output image based on the specific information.

9. The video decoding method according to claim 6, **characterized by** further comprising generating specific information indicating that the decoded image or the restored image is used as an output image, and outputting the decoded image or the restored image as the output image based on the specific information.

10. The video encoding method according to any one of claims 1, 3 and 7, **characterized in that** the specific information is encoded for each frame or for each local region in the frame.

11. The video decoding method according to any one of claims 2, 4 and 8, **characterized in that** the specific information is decoded for each frame or for each local region in the frame.

12. The video encoding method according to any one of claims 1, 3 and 7, **characterized by** further comprising calculating an error between the local decoded image and the restored image and an input original image, and generating specific information indicating that the image having a small error is the reference image

13. The video encoding method according to claim 5, **characterized by** further comprising generating specific information using any one or more of an absolute difference value sum with respect to a peripheral pixel which is an index that is able to be acquired from the local decoded image or the decoded image, a difference square sum, an activity, a space frequency, an edge intensity, and an edge direction.

14. The video decoding method according to claim 6 or 9, **characterized by** further comprising generating specific information using any one or more of an absolute difference value sum with respect to a peripheral pixel which is an index that is able to be acquired from the local decoded image or the decoded image, a difference square sum, an activity, a space frequency, an edge intensity, and an edge direction.

15. The video encoding method according to claim 5, **characterized by** further comprising generating specific information using any one or more of a quantization parameter which is part of encoded information, a block size, a prediction mode, a motion vector, and transform coefficient information.

16. The video decoding method according to claim 6 or 9, **characterized by** further comprising generating specific information using any one or more of a quantization parameter which is part of encoded information, a block size, a prediction mode, a motion vector, and transform coefficient information.

17. A video encoding apparatus, **characterized in that** an encoded image is used as a reference image for prediction of an image to be encoded next, comprising:

   a restored image generator to generate a restored image by applying a filter to a local decoded image of an encoded image;
   a setting module to set filter coefficient information of the filter;
   a decoder to encode the filter coefficient information;
   an encoder to encode specific information indicating that the local decoded image or the restored image is used as a reference image; and
   a storing module to store the local decoded image or the restored image in a memory as the reference image based on the specific information.

18. A video decoding apparatus, **characterized in that** a decoded image is used as a reference image for prediction of an image to be decoded next, comprising:

   a restored image generator to generate a restored image by applying a filter to a decoded image;
   a first decoder to decode filter coefficient information of the filter;
   a second decoder to decode specific information indicating that the local decoded image or the restored image is used as a reference image; and
   a storing module to store the decoded image or the restored image in a memory as the reference image based on the specific information.

19. A video encoding method, **characterized in that** an encoded image is used as a reference image for prediction of an image to be encoded next, comprising:

   encoding specific information indicating that a restored image generated by applying a filter to a local decoded image of an encoded image is used as a reference image or the local decoded image is used as the reference image; and
   storing the local decoded image or the restored image as the reference image in a memory based on the specific information.

20. The video encoding method according to claim 19, **characterized in that** encoding the specific information comprises encoding region setting information for determining a local region size to set specific information for each local region in a frame and encode the specific information.

21. The video encoding method according to claim 19, **characterized in that** encoding the specific information comprises setting filter coefficient information of the filter based on the specific information to encode the specific information for each local region in the frame.

22. The video encoding method according to claim 19, **characterized in that** the specific information encoding step encodes region setting information for each frame or each local region in the frame.

23. The Video encoding method according to claim 20 or 22, **characterized in that** the region setting information is a value indicating a size of the local region.

24. The video encoding method according to claim 20 or 22, **characterized in that** the region setting information indicates a partitioning manner of partitioning an inside of the local region of a given size.

25. The video encoding method according to claim 24, **characterized in that** the region setting information indicates an index indicating a local region size determined by a region size prescribed table prepared beforehand or a partitioning manner.

26. The video encoding method according to claim 25, **characterized by** comprising preparing a plurality of region size prescribed tables and switching them based on one or more of an image size, a picture type and a quantization parameter prescribing roughness of quantization.

27. A video decoding method, **characterized in that** a decoded image is used as a reference image for prediction of an image to be decoded next, comprising:

decoding specific information indicating that a restored image generated by applying a filter to a decoded image is used as a reference image or the decoded image is used as the reference image;
storing the decoded image or the restored image in a memory as the reference image based on the specific information.

28. The video decoding method according to claim 27, **characterized in that** the region setting information decoding step comprises a region setting information decoding step of decoding region setting information for determining a size of a local region to decode the specific information and set it for each local region in a frame.

29. The video decoding method according to claim 27, **characterized in that** the region setting information decoding step decodes the region setting information for each frame or for each local region in the frame.

30. The video decoding method according to claim 28 or 29, **characterized in that** the region setting information is a value indicating a size of the local region.

31. The video decoding method according to claim 28 or 29, **characterized in that** the region setting information indicates a partitioning manner for partitioning an inside of the local region of a given size.

32. The video decoding method according to claim 28 or 29, **characterized in that** the region setting information is an index indicating a region size determined by a region size prescribed table prepared beforehand or a partitioning manner.

33. The video decoding method according to claim 32, **characterized by** comprising preparing a plurality of region size prescribed tables and switching them based on one or more of an image size, a picture type and a quantization parameter prescribing roughness of quantization.

34. The video encoding method, **characterized in that** the step of generating a restored image by applying a filter to an encoded local decoded image according to any one of claims 1, 3, 5, 13, 15, 19, 20, 21, 22 and 24 executes determining whether the local decoded image is a block boundary and filter processing for eliminating a block distortion on a pixel by which the local decoded image is determined as the block boundary.

35. The video decoding method, **characterized in that** the step of generating the restored image by applying a filter to the decoded image according to any one of claims 2, 4, 6, 9, 27, 28 and 29 comprises determining whether the local decoded image is a block boundary, and performing filter processing for eliminating a block distortion on a pixel by which the local decoded image is determined to be the block boundary.

36. A video encoding method, **characterized in that** an encoded image is used as a reference image for motion compensated prediction, comprising:

generating a restored image by applying a filter to a local decoded image of an encoded image;
setting filter coefficient information of the filter;

encoding the filter coefficient information;
encoding specific information indicating that the local decoded image or the restored image is used as a reference image; and
using the local decoded image or the restored image as the reference image for motion compensated prediction based on the specific information

37. A video decoding method, **characterized in that** a decoded image is used as a reference image for motion compensated prediction, comprising:

generating a restored image by applying a filter to a decoded image;
decoding filter coefficient information of the filter;
decoding specific information indicating that the local decoded image or the restored image is used as a reference image; and
using the decoded image or the restored image as the reference image for motion compensated prediction based on the specific information.

38. The video encoding method according to claim 20 or 22, **characterized in that** the region setting information is hierarchical partitioning information for partitioning an inside of the local region into regions shrinking sequentially with increasing depth of the hierarchical layer.

39. The video encoding method according to claim 38, **characterized in that** the hierarchical partitioning information is region partitioning information indicating whether or not respective regions of each hierarchical layer are partitioned.

40. The video encoding method according to claim 38, **characterized in that** the hierarchical partitioning information includes maximum hierarchical information indicating a maximum value of depth of the hierarchical layer.

41. The video decoding method according to claim 28 or 29, **characterized in that** the region setting information is hierarchical partitioning information for partitioning the local region into regions shrinking sequentially with increasing depth of the hierarchical layer.

42. The video decoding method according to claim 41, **characterized in that** the hierarchical partitioning information is region partitioning information indicating whether or not respective regions of each hierarchical layer are partitioned.

43. The video decoding method according to claim 41, **characterized in that** the hierarchical partitioning information includes maximum hierarchical information indicating a maximum value of depth of the hierarchical layer.

FIG. 1

FIG. 2

**F I G. 3**

SSD$_A$···Error sum of squares of local decoded image and input image
SSD$_B$···Error sum of squares of decoded image and input image

**F I G. 4**

Decoding controller —207

Filter coefficient information —17

Encoded data 14 → Entropy decoder 201 →13 Inverse transform/ dequantization module 202 →15 204 ⊕ 21 → Switching filter processor 205 → Output image signal 22

Prediction signal generator 203 ~11

Reference image buffer 206 19 18

Switching information

Video decoding apparatus —2000

**FIG. 5**

205A

Switching filter processor

Loop filter switch module 209

19 → Reference image signal

A SW B 20

Filter processor 208

21 Decoded image signal

17 Filter coefficient information

18 Switching information

22 → Output image signal

**FIG. 6**

Start

Decode filter coefficient information, loop_filter_flag ~S2100

Acquire filter coefficient information ~S2101

Acquire loop_filter_flag ~S2102

S2103

Yes ◇ loop_filter_flag==0 ◇ No

S2104

Store decoded image in reference image buffer

S2105

Store restored image in reference image buffer

End

F I G. 7

205B

22 Switching filter processor 21

Output image signal

Loop filter switch module

209

Decoded image signal

A SW

B

Filter processor

17

Reference image signal

19

20

208

Filter coefficient information

18

Switching information

F I G. 8

31

**F I G. 9**

**F I G. 10**

Encoding controller — 109

Input image signal

10

−
102

12

Transform/
quantization
module

103

13

Inverse
transform/
dequantization
module

105

Entropy
encoder

104

Encoded
data

14

15

+ — 106

16

302

301A

11

Switching
information
generation
predictor

Local
decoded
image
buffer

303

Restored
image buffer

20

Loop
filter
processor

17

Filter coefficient
information

304

Video encoding apparatus

18 — Switching information

3000

# F I G. 11

301A

Switching information
generation predictor

11

Prediction image signal

305A

Reference
switching
predictor

16

Local decoded image signal

20

Restored image signal

18

Switching information

112

Switching
information
generator

10

Input image signal

# F I G. 12

305A

Reference switching predictor

16

Loop filter switch module

Local decoded image signal

101

114

A SW

20

11

Prediction signal generator

19

B

Restored image signal

Prediction image signal

18

Switching information

**F I G. 13**

302

Loop filter processor

16

Local decoded image signal

20

10

Restored image signal

Filter processor

Filter setter

Input image signal

17

113

110

Filter coefficient information

**F I G. 14**

```
                    ( Start )
                        │
                        ▼
  Store local decoded image in local decoded image buffer ── S3100
                        │
                        ▼
              Set filter coefficient ── S3101
                        │
                        ▼
  Filter local decoded image to generate restored image ── S3102
                        │
                        ▼
  Store reconstructed image in restored image buffer ── S3103
                        │
                        ▼
      Encode filter coefficient information ── S3104
                        │
                        ▼
  Derive prediction image from local decoded image and input ── S3105
  to switching information generator
                        │
                        ▼
  Derive prediction image from restored image and input ── S3106
  to switching information generator
                        │
                        ▼
           Calculate SSD_A, SSD_B ── S3107
                        │
                        ▼
                     S3108
           Yes ◄──────◇──────► No
        S3109 │   SSD_A ≦ SSD_B    │ S3110
              ▼                    ▼
      loop_filter_flag=0    loop_filter_flag=1
              │                    │
              └────────┬───────────┘
                       ▼
                    S3111
          Yes ◄──────◇──────► No
       S3112 │ loop_filter_flag==0 │ S3113
             ▼                     ▼
   Derive prediction image   Derive prediction image
   from local decoded image   from restored image
             │                     │
             └──────────┬──────────┘
                        ▼
           Encode loop_filter_flag ── S3114
                        │
                        ▼
                    ( End )
```

$SSD_A$···Error sum of squares of prediction image derived from local decoded image and input image

$SSD_B$···Error sum of squares of prediction image derived from decoded image and input image

# F I G. 15

Decoding controller ~ 206

Filter coefficient information ~ 17

Output image signal

Encoded data

201

13    Inverse transform/ dequantization module    15    204    21    Filter processor    22

208

Entropy decoder

18

Switching information

202

Reference switching predictor

401A ~

11

Decoded image buffer

402

20

403 ~    Restored image buffer

Video decoding apparatus ~ 4000

## FIG. 16

401A

Reference switching predictor    21

203

Loop filter switch module

Decoded image signal    20

11

Prediction image signal

Prediction signal generator

19    209 ~    A    SW

B

Restored image signal

18

Switching information

## FIG. 17

Start

Decode filter coefficient information, loop_filter_flag —— S4100

Store decoded image in decoded image buffer —— S4101

Acquire filter coefficient information —— S4102

Filter decoded image to generate restored image —— S4103

Store reconstructed image in restored image buffer —— S4104

Acquire loop_filter_flag —— S4105

S4106

Yes ◇ loop_filter_flag==0 No

S4107

Derive prediction image from decoded image

S4108

Derive prediction image from restored image

End

F I G. 18

Encoding controller — 109

Input image signal

Video encoding apparatus

Transform/quantization module 103

Entropy encoder 104

Encoded data

Inverse transform/dequantization module 105

Switching information generation predictor 301B

Local decoded image buffer

Filter setting module 110

Filter coefficient information

Switching information 18

3001

FIG. 19

Switching information generation predictor 301B

Reference switching predictor 305B

Local decoded image signal 16

Filter coefficient information 17

Prediction image signal 11

Switching information 18

Switching information generator 112

Input image signal 10

FIG. 20

305B

Reference switching predictor

Loop filter
switch module

101

11
Prediction
image signal

Prediction
signal
generator

114

A SW
B

19

20

113

Filter
processor

16

Local decoded
image signal

17

Filter coefficient
information

18

Switching
information

F I G. 21

Decoding controller — 206

Filter coefficient information — 17

201

Encoded
data

14

Entropy
decoder

13

Inverse
transform/
dequantization
module

15

204

+

11

21

208

Filter
processor

Output
image
signal

22

18

Switching information

202

401B

Reference
switching
predictor

Decoded
image
buffer

402

4001

Video decoding apparatus

F I G. 22

401B

Reference switching predictor

21

Loop filter
switch module

203

Prediction
signal
generator

11

Prediction
image
signal

209

A   SW
    B

19

20

208

Filter
processor

Decoded image
signal

17

Filter coefficient
information

18

Switching
information

## FIG. 23

Encoding controller — 109

Input
image
signal

10

102

12

103

Transform/
quantization
module

13

104

Entropy
encoder

Encoded
data

14

Inverse
transform/
dequantization
module

105

11

15

106

16

Prediction
signal
generator

101

501

Reference
image
buffer

108

19

Loop filter
processor

17

Filter coefficient
information

5000

Video encoding apparatus

## FIG. 24

501

Loop filter processor

502

Switching information generation filter processor

19

Reference image signal

17

Filter coefficient information

110

Filter setting module

16

Local decoded image signal

10

Input image signal

F I G. 25

Encoding contoroller ～109

503

Switching information generator

Switching information

18

16

Local decoded image signal

111

Switching filter processor

19

Reference image signal

17

Filter coefficient information

Switching information generation filter processor

502

F I G. 26

Start

Set filter coefficient information — S5100

Acquire local decoded image — S5101

Calculate SAD — S5102

S5103

Yes ⟵ SAD ≦ T ⟶ No

S5104

loop_filter_flag=0

S5105

loop_filter_flag=1

S5106

Yes ⟵ loop_filter_flag=0 ⟶ No

S5107

Store local decoded image in reference image buffer

S5108

Store local restored image in reference image buffer

Encode filter coefficient information — S5109

End

SAD···Sum of absolute difference with respect to peripheral pixel in local decoded image

T  ···Threshold

F I G. 27

Decoding controller — 207

Filter coefficient information 17

Encoded data 14 → Entropy decoder 201 →13 Inverse transform/ dequantization module 202 →15 204 ⊕ →21 Switching information generation filter processor 203 601 → Output image signal 22

11 Prediction signal generator 203

206 — Reference image buffer 19

Video decoding apparatus 6000

## F I G. 28

Decoding controller — 207

602

Switching information 18

205

Switching information generator

21 Decoded image signal

19 Reference image signal

Switching filter processor 205

17 Filter coefficient information

22 Output image signal

Switching information generation filter processor 601

## F I G. 29

```
                        ┌─────────┐
                        │  Start  │
                        └─────────┘
                             │
                             ▼
          ┌──────────────────────────────────────┐
          │   Decode filter coefficient information│─── S6100
          └──────────────────────────────────────┘
                             │
                             ▼
          ┌──────────────────────────────────────┐
          │   Acquire filter coefficient information│─── S6101
          └──────────────────────────────────────┘
                             │
                             ▼
          ┌──────────────────────────────────────┐
          │        Acquire decoded image          │─── S6102
          └──────────────────────────────────────┘
                             │
                             ▼
          ┌──────────────────────────────────────┐
          │           Calculate SAD               │─── S6103
          └──────────────────────────────────────┘
                             │
                             ▼
                                         S6104
                    Yes   ◇ SAD ≦ T ◇   No
      S6105         ◄──────               ──────►        S6106
     ┌──────────────────────┐      ┌──────────────────────┐
     │   loop_filter_flag=0  │     │   loop_filter_flag=1  │
     └──────────────────────┘      └──────────────────────┘
                             │
                             ▼
                                         S6107
                    Yes   ◇ loop_filter_flag=0 ◇   No
      S6108         ◄──────                    ──────►    S6109
     ┌──────────────────────┐      ┌──────────────────────┐
     │Store decoded image in │     │Store restored image in│
     │reference image buffer │     │ reference image buffer│
     └──────────────────────┘      └──────────────────────┘
                             │
                             ▼
                        ┌─────────┐
                        │   End   │
                        └─────────┘
```

SAD···Sum of absolute difference with respect to peripheral pixel in decoded image

T    ···Threshold

# FIG. 30

Syntax

High level syntax `1900`

Sequence parameter set syntax `1901`

Picture parameter set syntax `1902`

Slice lever syntax `1903`

Slice header syntax `1904`

Slice data syntax `1905`

Loop filter data syntax `1906`

Macroblock leve syntax `1907`

Macroblock layer syntax `1908`

Macroblock prediction syntax `1909`

F I G. 31

(a)

```
loop_filter_data( ) {
    filter_size_y
    filter_size_x
    for(cy=0;cy<filter_size_y;cy++){
        for(cx=0;cx<filter_size_x;cx++){
            filter_coeff[cy][cx]
        }
    }
    for(i=0; i<NumOfMacroblock;i++){
        loop_filter_flag
    }
}
```

(b)

```
loop_filter_data( ) {
    filter_size_y
    filter_size_x
    for(cy=0;cy<filter_size_y;cy++){
        for(cx=0;cx<filter_size_x;cx++){
            filter_coeff[cy][cx]
        }
    }
}
```

(c)

```
macroblock_layer( ) {
    . . .
    loop_filter_flag
    . . .
}
```

(d)

```
loop_filter_data( ) {
    filter_size_y
    filter_size_x
    for(cy=0;cy<filter_size_y;cy++){
        for(cx=0;cx<filter_size_x;cx++){
            filter_coeff[cy][cx]
        }
    }
    for(i=0; i<NumOfMacroblock;i++){
        loop_filter_flag
    }
    post_filter_flag
}
```

F I G. 32

Reference image

Macroblock to which loop filter is applied

Macroblock to which loop filter is not applied

# FIG. 33

F I G. 34

F I G. 35

Encoding controller

Decoding controller

Encoded data

Input original image

Output image

Transform/ quantization module

Entropy encoder

~ 90

Filter coefficient information

Inverse transform/ dequantization module

Prediction signal generator

Reference image buffer

Post filter setting module

905

Video encoding apparatus

Entropy decoder

Inverse transform/ dequantization module

Prediction signal generator

Reference image buffer

Post filter processor

906

90

Filter coefficient information

Video decoding apparatus

F I G. 36

Reference
image signal
19

20

Loop filter
switch module
114

113

Filter
processor

Switching filter processor
111

18 Switching information
23 Region setting
information
16

Local decoded
17 image signal

Filter coefficient
information

A
SW
B

F I G. 37

Reference
image signal
19

Output image
signal
22

20

Loop filter
switch module
209

208

Filter
processor

Switching filter processor
205A

18 Switching information
23 Region setting
21 information

Decoded image signal
17

Filter coefficient
information

A
SW
B

F I G. 38

(a)

| Index | Block size |
|-------|------------|
| 0 | 4 × 4 |
| 1 | 8 × 8 |
| 2 | 16 × 16 |
| 3 | 32 × 32 |
| 4 | 64 × 64 |
| 5 | 128 × 128 |
| 6 | 256 × 256 |
| 7 | 512 × 512 |

(b)

| Index | Block dividing method |
|-------|----------------------|
| 0 | No partition |
| 1 | Lateral two-partition |
| 2 | Vertical two-partition |
| 3 | Lateral and vertical two-partition |

(c)

| Image size | Small ⟵⟶ Large | | |
|---|---|---|---|
| Picture type | I picture | P picture | B picture |
| Quantization parameter | Small ⟵⟶ Large | | |
| Index | Block size of table 1 | Block size of table 2 | Block size of table 3 |
| 0 | 4 × 4 | 8 × 8 | 16 × 16 |
| 1 | 8 × 8 | 16 × 16 | 32 × 32 |
| 2 | 16 × 16 | 32 × 32 | 64 × 64 |
| 3 | 32 × 32 | 64 × 64 | 128 × 128 |

# F I G. 39

16×16
(No partition)

16×8
(Lateral two-partition)

8×16
(Vertical two-partition)

8×8
(Lateral and vertical
two-partition)

8×8
(No partition)

8×4
(Lateral
two-
partition)

4×8
(Vertical
two-
partition)

4×4
(Lateral and
vertical two-
partition)

F I G. 40

Reference image

Block to which loop filter is applied

Block to which loop filter is not applied

F I G. 41

(a)

```
loop_filter_data( ){
    filter_size_y
    filter_size_x
    for(cy=0;cy<filter_size_y;cy++){
        for(cx=0;cx<filter_size_x;cx++){
            filter_coeff[cy][cx]
        }
    }
    filter_block_size
    for(i=0; i<NumOfBlock; i++){
        loop_filter_flag
    }
}
```

(b)

```
loop_filter_data( ){
    filter_size_y
    filter_size_x
    for(cy=0;cy<filter_size_y;cy++){
        for(cx=0;cx<filter_size_x;cx++){
            filter_coeff[cy][cx]
        }
    }
    for(i=0; i<NumOfMacroblock; i++){
        filter_block_size
        for(j=0; j<NumOfSubblock; j++){
            loop_filter_flag[i]
        }
    }
}
```

F I G. 42

F I G. 43

```
                    ┌─────── Start ───────┐
                              │
                    ┌─────────────────────────┐
                    │         r = 0           │──S7100
                    └─────────────────────────┘
                              │
                    ┌─────────────────────────────────────┐
                    │ Set loop_filter_flag of all local   │──S7101
                    │ regions to 1                        │
                    └─────────────────────────────────────┘
                              │
                    ┌─────────────────────────┐
                    │       r = r+1           │──S7102
                    └─────────────────────────┘
                              │
                    ┌─────────────────────────────────┐
                    │ Set filter coefficient information │──S1100
                    └─────────────────────────────────┘
                              │
                    ┌─────────────────────────┐
                    │         n = 0           │──S7103
                    └─────────────────────────┘
                              │
                    ┌─────────────────────────┐
                    │       n = n+1           │──S7104
                    └─────────────────────────┘
                              │
                    ┌─────────────────────────────────┐
                    │ Input local decoded image to    │──S1101
                    │ switching information generator  │
                    └─────────────────────────────────┘
                              │
                    ┌─────────────────────────────────┐
                    │ Generate restored image, input to│──S1102
                    │ switching information generator  │
                    └─────────────────────────────────┘
                              │
                    ┌─────────────────────────────────┐
                    │ Calculate SSD_A, SSD_B          │──S1103
                    └─────────────────────────────────┘
                              │
                          S1104
             Yes ◇──── SSD_A ≤ SSD_B ────◇ No
     S1105  │                              │  S1106
  ┌──────────────────┐          ┌──────────────────┐
  │ loop_filter_flag │          │ loop_filter_flag │
  │      = 0         │          │      = 1         │
  └──────────────────┘          └──────────────────┘
             │                              │
                          S1107
     Yes ◇──── loop_filter_flag == 0 ────◇ No
  S1108  │                              │  S1109
  ┌──────────────────┐          ┌──────────────────┐
  │ Store local      │          │ Store restored   │
  │ decoded image in │          │ image in         │
  │ reference image  │          │ reference image  │
  │ buffer           │          │ buffer           │
  └──────────────────┘          └──────────────────┘
             │                              │
                          S7105
                 ◇──── n == N ────◇ No
                        │ Yes
                          S7106
                 ◇──── r == R ────◇ No
                        │ Yes
                    ┌─────────────────────────────────┐
                    │ Encode filter coefficient       │──S1110
                    │ information, loop_filter_flag    │
                    └─────────────────────────────────┘
                              │
                    ┌─────── end ───────┐
```

**F I G. 44**

$SSD_A$···Error sum of squares of local decoded image and input image
$SSD_B$···Error sum of squares of reconstructed image and input image

Encoded information

702

Filter boundary
determination
processor

Image
restoring
filter processor

A
B

Deblocking
filter processor

B
A

Local
decoded
image
signal

706

705

704

703

701

Filter coefficient information

F I G. 45

F I G. 46

Input
image
signal

Encoded
data

Decoding controller —206

201

Entropy
decoder

202

Inverse
transform/
dequantization
module

204

$+$

811

Deblocking
filter

Prediction image

Motion vector information

Prediction
image
generator

Decoded
image

813

Decoded
image
buffer

814

Filter coefficient, Switching information

Video encoding apparatus

8000

F I G. 47

Filter coefficient information    Switching information

823

Interpolated
image
generator

822

Decoded
image
generator

821

A

B

Prediction
image

Decoded
image

Motion vector information

F I G. 48

Motion vector information

Filter coefficient information

Switching information

836

832

Weighted prediction image generator

L-bit

Interpolated image generator

M-bit

Integer pixel filter

N-bit
Pre-
diction
image

A

N-bit
De-
coded
image

B

A

B

835

834

831

Bit degenerate module

Bit degenerate module

837

833

F I G. 49

F I G. 50

Layer 0

Layer 1

Layer 2

Layer 3

F I G. 51

F I G. 52

| Parent block size | 16×16 | 32×32 | 64×64 | 128×128 |
|---|---|---|---|---|
| Layer 0 | 16×16 | 32×32 | 64×64 | 128×128 |
| Layer 1 | 8×8 | 16×16 | 32×32 | 64×64 |
| Layer 2 | 4×4 | 8×8 | 16×16 | 32×32 |
| Layer 3 | 2×2 | 4×4 | 8×8 | 16×16 |
| Layer 4 | 1×1 | 2×2 | 4×4 | 8×8 |

# F I G. 53

```
loop_filter_data( ){
    filter_size_y
    filter_size_x
    for(cy=0;cy<filter_size_y;cy++){
        for(cx=0;cx<filter_size_x;cx++){
            filter_coeff[cy][cx]
        }
    }
    filter_block_size
    max_layer_level
    for(pblk=0; pblk<NumOfParentBlock; pblk++){
        valid_block_flag[0][0]=1
        for(layer=0;layer<max_layer_level;layer++){
            for(cblk=0; cblk<NumOfChildBlock[layer]; cblk++){
                if(valid_block_flag[layer][cblk]==1){
                    block_partitioning_flag[pblk][layer][cblk]
                    if(block_partitioning_flag[pblk][layer][cblk]==1){
                        for(scblk=0; scblk<4; scblk++){
                            valid_block_flag[layer+1][scblk*4+scblk]=1
                        }
                    }
                }
            }
        }
        for(layer=0;layer<=max_layer_level;layer++){
            for(cblk=0; cblk<NumOfChildBlock[layer]; cblk++){
                if(valid_block_flag[layer][cblk]==1&&block_partitioning_flag[pblk][layer][cblk]==0){
                    loop_filter_flag[pblk][layer][cblk]
                }
            }
        }
    }
}
```

# F I G. 54

```
loop_filter_data( ){
    filter_size_y
    filter_size_x
    for(cy=0;cy<filter_size_y;cy++){
        for(cx=0;cx<filter_size_x;cx++){
            filter_coeff[cy][cx]
        }
    }
    filter_block_size
    for(pblk=0; pblk<NumOfParentBlock; pblk++){
    max_layer_level
        valid_block_flag[0][0]=1
        for(layer=0;layer<max_layer_level;layer++){
            for(cblk=0; cblk<NumOfChildBlock[layer]; cblk++){
                if(valid_block_flag[layer][cblk]==1){
                    block_partitioning_flag[pblk][layer][cblk]
                    if(block_partitioning_flag[pblk][layer][cblk]==1){
                        for(scblk=0; scblk<4; scblk++){
                            valid_block_flag[layer+1][scblk*4+scblk]=1
                        }
                    }
                }
            }
        }
        for(layer=0;layer<=max_layer_level;layer++){
            for(cblk=0; cblk<NumOfChildBlock[layer]; cblk++){
                if(valid_block_flag[layer][cblk]==1&&block_partitioning_flag[pblk][layer][cblk]==0){
                    loop_filter_flag[pblk][layer][cblk]
                }
            }
        }
    }
}
```

F I G. 55

## INTERNATIONAL SEARCH REPORT

| | International application No. |
|---|---|
| | PCT/JP2008/073636 |

A. CLASSIFICATION OF SUBJECT MATTER
*H04N7/32(2006.01)i*

According to International Patent Classification (IPC) or to both national classification and IPC

B. FIELDS SEARCHED

Minimum documentation searched (classification system followed by classification symbols)
H04N7/26-7/68

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-506361 A (Thomson Licensing),<br>15 March, 2007 (15.03.07),<br>Claims 1, 10; Par. Nos. [0019] to [0044];<br>Figs. 3 to 8<br>& US 2006/0291557 A1  & EP 1665804 A1<br>& WO 2005/034517 A1 | 1-12,15-19,<br>21,27,34-37<br>13,14,20,<br>22-26,28-33,<br>38-43 |
| X | JP 2003-179933 A (Matsushita Electric<br>Industrial Co., Ltd.),<br>27 June, 2003 (27.06.03),<br>Par. Nos. [0047] to [0053]; Figs. 6, 9<br>& US 2004/0032908 A1  & EP 1387585 A1<br>& WO 2003/026314 A1 | 19,27,34,35 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>31 March, 2009 (31.03.09) | Date of mailing of the international search report<br>07 April, 2009 (07.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 249 572 A1**

### INTERNATIONAL SEARCH REPORT

| International application No. |
| --- |
| PCT/JP2008/073636 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-275110 A (Matsushita Electric Industrial Co., Ltd.), 05 October, 2001 (05.10.01), Full text; all drawings & US 2001/0036320 A1 | 1-43 |
| A | JP 9-121354 A (Oki Electric Industry Co., Ltd.), 06 May, 1997 (06.05.97), Par. Nos. [0008] to [0011] (Family: none) | 1-43 |
| A | JP 9-93578 A (Matsushita Electric Industrial Co., Ltd.), 04 April, 1997 (04.04.97), Full text; all drawings (Family: none) | 1-43 |

Form PCT/ISA/210 (continuation of second sheet) (April 2007)

67

**INTERNATIONAL SEARCH REPORT**

International application No.

PCT/JP2008/073636

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
The technical feature common to or corresponding to the inventions of claims 1-43 is "specific information." However, the technical feature to specify whether to perform a filter process disclosed in JP 2007-506361 A (Thomson Licensing), 15 March, 2007 (15.03.07), claims 1, 10, paragraphs [0019]-[0044], Fig. 3-8; and the filter type data disclosed in JP 2003-179933 A (Matsushita Electric Industrial Co., Ltd.), 27 June, 2003 (27.06.03), paragraphs [0047]-[0053] and Figs. 6, 9 may be information which specifies use of a decoded image or use of a restored image as a reference image.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable,
the                             payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

| International application No. |
| --- |
| PCT/JP2008/073636 |

Continuation of Box No.III of continuation of first sheet(2)

There is no technical relationship among those inventions involving one or more of the same or corresponding special technical features. Accordingly, the inventions are not so linked as to form a single general inventive concept.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001275110 A

**Non-patent literature cited in the description**

- **G.Bjontegaard.** Deblocking filter for 4x4 based coding. *ITU-T Q.15/SG16 VCEG document,Q15-J-27,* May 2000

- **S.Wittmann ; T.Wdi.** Post-filter SEI message for 4:4:4 coding. *JVT of ISO/IEC MPEG & ITU-T VCEG,JVT-S030,* April 2006